# EUROPEAN PATENT APPLICATION

(11) **EP 4 722 946 A1**
(43) Date of publication of application: **08.04.2026**
(21) Application number: 25203462.4
(22) Date of filing: 19.09.2025
(51) Int. Cl.: G06F 16/583

(54) **SYSTEM AND METHOD OF FRAME LOCALIZED ARTIFICIAL INTELLIGENCE RETRIEVAL**

(30) Priority: 04.10.2024 US 202463703722 P; 26.03.2025 US 202519091288
(71) Applicant: Visual Defence Inc., Richmond Hill, ON L4B 1L5 (CA)
(72) Inventor: TAL, Royi, RICHMOND HILL, L4B 1L5 (CA)
(74) Representative: Studio Torta S.p.A.

(57) **Abstract**

Systems and methods provide localization and framed analysis of location referenced image data and related data thereof. The system / method can be used in a variety of applications which can be related to governmental operations, asset management, surveying, provision of public services, maintenance, compliance, issue management, and/or other applications. A user, interacting with the system through an interface, is able to access one or more datasets obtained from one or more platforms, localize it using various criteria such as defined in the frame localized retrieval instructions, and/or frame analysis which can be applied to the dataset(s) and/or portion(s) thereof. The analysis can use artificial intelligence and intake and output the data in one or more modalities. The results can then be used for creation and/or updates of records in relation to a variety of governmental, municipal, and/or organizational applications.

## Description

### FIELD

The present disclosure claims priority to U.S. Provisional Patent Application No. 63/703,722 filed October 4, 2024, the entire contents of which are incorporated herein by reference.

### BACKGROUND

Capture of data, including video and image data can be done by specialized systems and for specialized purposes. The data can also be processed using specialized functions for specialized purposes. For example, chatbots exist which allow users to interact with Al technologies in a human friendly way, but such chat applications are generally limited to customer service applications and processing of complaints or provision of summarized information. One disadvantage in the state of the art is that there is not any way which allows organizations (for example, such as governments), to leverage data collected from one or more data collection platforms and potentially in more than one format, and apply it for various applications such as asset management, inspections, enforcement, operations, risk assessment, surveys, and for other purposes in a unified manner.

One object of the present invention is to leverage artificial intelligence in unprecedented ways, in order to help address one or more disadvantages present in the state of the art.

### SUMMARY

Mobile and immobile platforms equipped with cameras and/or devices collect data, including image and/or video information, which is collected and stored on the platforms, devices, and/or servers. The data can be retrieved in its various formats (images, videos, location, sensor, databases, audio, files, and other data) by one or more servers for intelligent processing. The system can include a variety of software(s), hardware(s), server(s), client(s), platform(s), and device(s), which are interacting with a variety of component(s), data source(s), business system(s), artificial intelligence system(s), database(s), web system(s), media system(s), geospatial system(s), surveying system(s), and other system(s). The invention can provide extensive data processing capabilities, including enhanced image and video processing capabilities, allowing the system to perform frame localized image based operations, as well as other image processing operations, including object detection, image classification, instance segmentation, key points extraction, pose estimations, Al operations, pro-processing of images, processing of images, post-processing of images, generation of images, multi-modal image analysis, and other related operations, whether AI, image or other. The novel technology can work with one or more of image type(s) obtained from a one or more camera(s), platform(s) and/or device(s) and identify in a structured and/or dynamic way assets present in images, issues present in images, and/or other insights available in image(s), and localize said issues by location and/or other parameters. The invention can support obtaining of data in various formats through various flows of data from one or more system(s) for various purposes. The flexible artificial intelligence supports processing of input data in various modalities and formats, and providing results in various modalities and formats. User can interact with the system through a client application using different user interface components to retrieve, localize, frame, present, segment, program, configure, review and/or otherwise interact with the data. The user can make requests to the system which allow selection, refinement, matching, generation of new data, quality review, and other software operations of the data available of the system, including retrieval of data from sources and other systems, and publication of result data to other systems. The data provided by the system can include original data, geospatial data, image data, asset data, rating data, insights data, structured data, report data, and other data. One or more users can use the system in one or more ways to perform one or more functions, including localizing the data based on location, assets, issues, sources, platforms, date, time, tasks, related data property, and other data. The technology can generate actionable items such as service requests, work orders, tickets, infractions, and/or other with one action by user(s) once reviewed.

A first aspect provided is a geospatial multi-modal system for intelligent retrieval and/or generation of data from one or more dataset(s) containing image(s) by framing and/or localizing of request(s) which leverage artificial intelligence; said system, applied with one or more digital government application(s), comprising of: a platform for collecting and/or storing a data set containing at least image data; at least one client for facilitating a user to interact with the system through a user interface; and a computing component for executing software instructions to: operate an artificial intelligence module including a multi-modal artificial intelligence component; receive from the user interface via a network interface a query, the query framing and/or localizing a request for retrieval and/or generation of data from the data set; and a server responsible for executing the software instructions and the artificial intelligence module in order to process the query and generate a result data for sending in response to the received query.

A second aspect provided is a method for geospatial multi-modal intelligent retrieval and/or generation of data from a digital government dataset containing images using artificial intelligence instructions comprising the steps of: making one or more queries to server using a client interface; receiving the one or more queries, such that the one or more queries frames the dataset, localizes the dataset, generates data and/or retrieves data from the dataset; processing the one or more queries using the artificial intelligence instructions to generate result data; presenting the result data to the user through the user interface; and receiving interaction instructions from the user for further manipulation of the result data, the interaction instructions received from the user interface.

### BRIEF DESCRIPTION OF DRAWINGS

Exemplary embodiments of the invention can now be described in conjunction with the following drawings by way of example only, in which:
Figure 1 depicts an embodiment of a computing system, which obtains various forms of data from platforms, devices, and systems for intelligent analysis.
Figure 2 depicts an embodiment of the system's potential interaction with other data sources, systems, platforms, devices and/or clients for the computing system of Figure 1;
Figure 3 depicts an embodiment of frame localized image based operations performed by the system of Figure 1;
Figure 4 depicts embodiments of various images collected from various platforms, which can be processed by the system of Figure 1 in various ways;
Figure 5 depicts sample flows of data from various data sources onto the system servers of the system of Figure 1;
Figure 6 depicts an embodiment of a general artificial intelligence used on the system of Figure 1 for processing different modalities of data;
Figure 7 depicts embodiments of an interaction with the system of Figure 1 including making requests from a user interface;
Figure 8 depicts various embodiments of user interface of Figure 7, which can be used to interact with the system of Figure 1 in different ways;
Figure 9 depicts embodiments of possible uses of the system of Figure 1, including by one or more users; and
Figure 10 depicts a method for frame localized processing of data, including retrieval of results of the system of Figure 1.

### DETAILED DESCRIPTION

The following description provides illustrative embodiments and should not be interpreted as limiting the scope of the invention. The invention may include additional components, elements, and/or features that are not explicitly mentioned, or it may omit certain components as required for specific implementations. Any headings or subheadings used in this description are for readability and organizational purposes only and should not be used to limit or interpret the scope of the invention. Any lists or enumerations of components, features, or steps presented in this description are provided for illustrative purposes only and should not be interpreted as exhaustive or limiting. Elements not explicitly listed can still fall within the scope of the invention. Terminology used in this description can vary depending on regional and/or linguistic preferences. Terms should be interpreted broadly to include all technically equivalent terms and uses. The order of operations, sequences, or steps described herein can be altered as needed without departing from the scope and spirit of the invention. References to singular terms can include the plural form and vice versa. The embodiments described herein are meant to illustrate possible variations and configurations of the invention. It is understood that various modifications, substitutions, and changes can be made without departing from the broader scope and spirit of the invention as defined in the description or claims. All such modifications, substitutions, subtractions, additions, and variations are intended to be included within the scope of the invention. Diagrams components, arrows, images, styling, formatting, and chosen examples are for illustration purposes and may vary in different embodiments from those depicted while achieving substantially the same purpose. Any components demonstrated in diagrams can, under various embodiment, be bundled up with other components, broken down to smaller components or have other numerations or quantities. Word labels in diagrams are for ease of reading and are not meant to limit the scope of the diagram item, and in a conflict between the word label and the number, the number together with the corresponding detailed description shall govern and best describe the object in the diagram. Any specific items, modules, models, brands, materials, dimensions, techniques, or methods mentioned are intended to serve as examples and not as limitations. It is recognized that items, modules, models, brands, materials, dimensions, techniques, or methods can achieve the same or similar purposes without deviating from the scope of the claimed invention. The description and drawings are to be regarded in an illustrative rather than a restrictive sense. Consequently, the invention is capable of numerous variations and modifications without departing from the spirit and scope of the invention. The invention encompasses all combinations of devices, components, apparatus, methods, systems, articles of manufacture, and applications thereof that perform substantially the same function in substantially the same way to achieve substantially the same result. Furthermore, the description can include references to specific technical standards, formats or protocols, which are provided as examples of the current state of the art. These references are not intended to limit the invention but to provide context and clarity regarding possible implementations. Claims shall not be limited by the preferred embodiments set forth in the description, but shall be given the broadest interpretation consistent with the language of the claims and the principle that the patentee is entitled to a full scope of protection for the invention as described and claimed. The numbering range 1-99 is not unique and is used to describe individual components within a diagram or an illustration within a diagram.

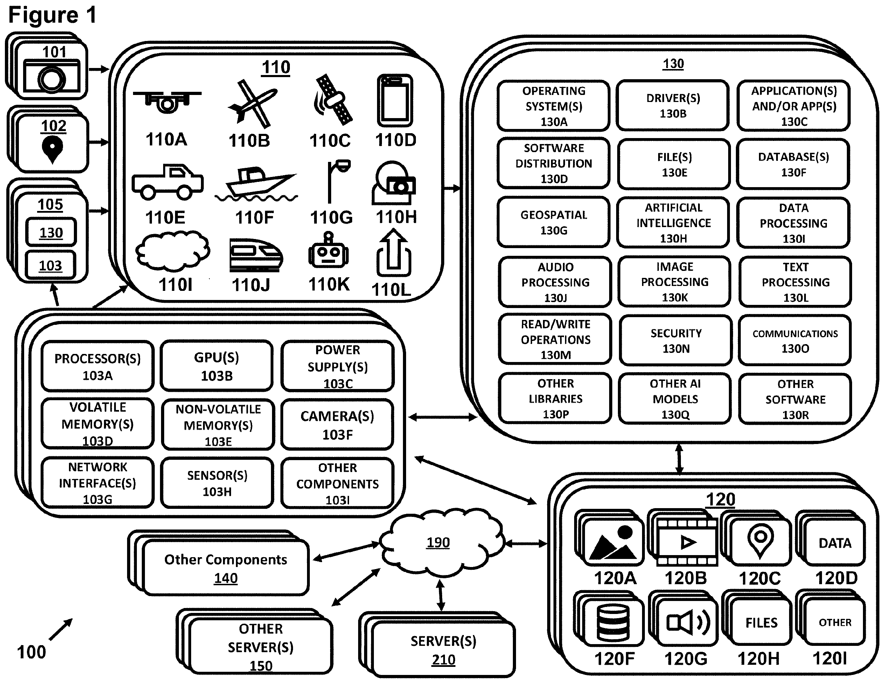

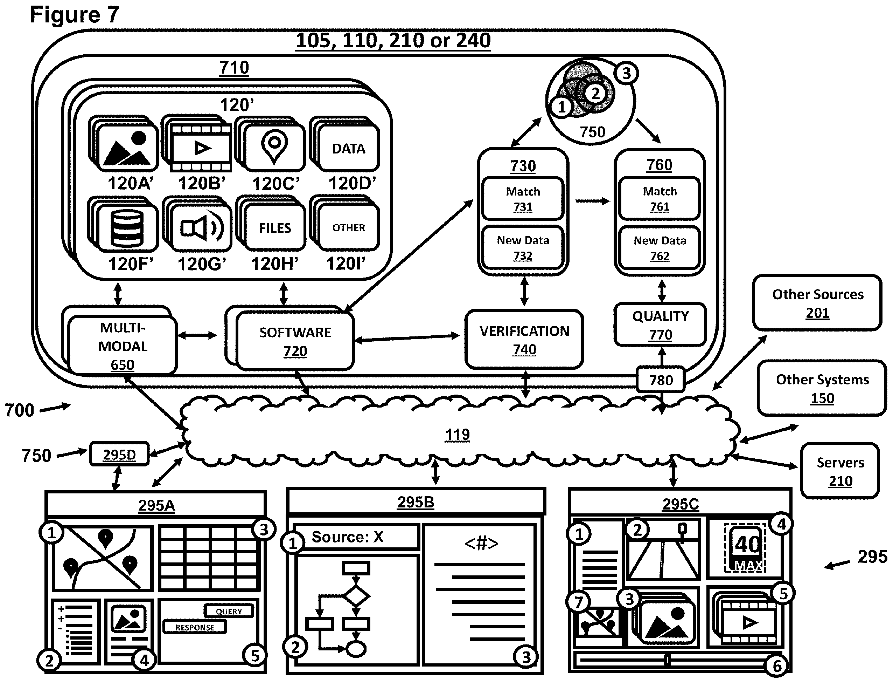

Referring to Figure 1, we depict a frame localized artificial intelligence retrieval (Flair) system 100 that collects data 120, which can include, for example, image(s), location(s), and other optional data, from one or more data platforms 110. For example, the system 100 can store the images (e.g. still and/or video) as a series of individual frames, such that the individual frames are included in the data 120 for access by a user interface 295A,B,C (see Figure 7 by example), as further described below. Advantageously, the user interface 295A,B,C can be used by the user to analyze the individual frames of the data 120 as part of the retrieval process, as described by example. Using the user interface 295A,B,C, the user can request in a framed manner (e.g. request only digital images containing a specified object of interest, request only digital images tagged with a specified geolocation, etc.). The request / query 750 (see Figure 7) would include frame localized retrieval instructions 295D, as given by example below.

The image collection module 101 of the system can be a standalone camera 101, integrated to a smart camera device 105, a device 105 connected to a camera 101, and/or a device 105 with access to localized image(s). The camera 101 can be one camera 101 or multiple cameras 101. The device 105 can be one standalone device 105 or multiple device(s) 105 working together. The camera(s) 101 can be of one type or multiple types. The optional localization module 102 can be a standalone sensor 102 (e.g. for detecting and reporting a geolocation of the camera 101 during collection of the image data - e.g. data 120) or integrated to / part of a smart camera 105 or a device 105. The sensor(s) 102 can be one sensor (for example, for location), or multiple sensors. The camera(s) 101, optional sensor module(s) 102, device(s) 105 or a combination thereof can be deployed onto, or integrated with, one or more platforms 110 of one or more types. Said platforms 110 can provide systems to mobilize, manage, collect, store, transmit, process, and/or utilize the image data, localization data, and/or a combination thereof. The localization data can also include sensor data such as orientation/direction (e.g. north, south, east, west and/or degree of inclination, declination from the horizon, accelerometer, magnetometer, rotational vector, gaming vector, and/or any other positional sensor and/or data thereof).

Platforms 110 with camera(s) 101 can include unmanned aerial vehicles (UAVs) 101A, aircraft 110B, satellites 110C, electronics 110D, vehicles 110E, 110F vessels, stationary platforms 110G, carried platforms 110H, cloud based platforms 110I, locomotive/rail platform 110I, robotic platforms 110K, or any other means to collect and/or upload data 110L. Reference to platform 110 sample embodiments 110A-110L with corresponding examples is for illustration purposes only, and other embodiments 110 are possible though not depicted. As such, the platform(s) 110 utilize the camera(s) 101 to obtain the data 120 during operation of the platform(S) 110 (e.g. for example travelling along a selected route).

The platforms 110 can vary in properties and purposes, and some properties can apply to multiple platform types 110A-110L. Examples of platform embodiments can include varying size and weight (for example, micro / mini / small / medium / large and/or other), varying range and endurance (for example, very short range, short range, medium range, long haul and/or other), varying altitudes (underground, underwater, surface, low altitude, medium altitude, high altitude, space and/or other), varying use (military, commercial, civilian, research, recreational, multipurpose and/or other), varying movement generation methods (stationary, motors, engines, biological, orbit, gravity, wind, thrusters, pneumatics, hydraulics, and/or other), varying power sources (nuclear, electricity, fuel, gas, solar, combustion, biological, steam, turbines, hybrid, solar panels, battery, self-generated or externally generated, tethered to grid power or untethered, and/or other power sources), varying movement related mechanisms (such as wheels, rotors, wings, propellers, limbs, elastics, tracks, inflation/deflation pockets, magnetics, aerodynamics, hydrodynamics, sails, fins, oars, paddles, jets, parachutes, tilts, pans, rollers, treads, tethers, mounts, fixtures, attachments, brackets, joints, hinges, actuators, sockets, balls, swivels, gears, pulleys, rotators, oscillators, skis, belts, and/or other), varying methods of operation (direct human operation, remote human operation, partial human operation, hybrid operation, partial automated operation, full autonomous operation and/or other), varying mediums traversed and/or penetrated (organic, inorganic, ground, air, water, space, and/or other), varying duration of operation (instant, near-instant, short time, medium time, long time, indefinite and/or other), varying number of device(s) and/or sensor(s) (none, one, some, multiple, many or other), and other variations, including variations related to the use, function, operation, safety, security, mechanics, power, payloads, software, hardware, purpose, applications, integration (to other platform(s) 110, device(s) 105 and/or system(s), and/or a combination thereof.

It is recognized that for each of the platforms 110, collection of the data 120 can be a primary purpose (for example, a CCTV camera 110G mounted on a wall), or a secondary purpose (for example, a bus 110E which is purposed to transit passengers, also equipped with a dash camera 101). It is recognized that the platform 101D can be a multi-purpose device, for example, a smart phone 110D, which can also be used to make calls, play games, read emails, and other smart phones applications, but also can be used by a person to take a picture 101, which can include location information 102, which may be derived from different methods (for example, GPS or GNSS location from smart phone 110D, or geo-location of wireless network platform 110D is connected to, or from augmented reality algorithms). The platform 110 can have a dynamic location sensor (for example, GPS and/or GNSS), or a pre-defined location 102 reference point. For example, a CCTV camera 110G can already have a mapped location (and potentially also field of view covered by the camera and direction), and as such, the image 101 location 102 of the CCTV camera 110G can be determined using a database, a lookup table, or other data source which includes the camera id and its location. The camera 101 can be a "dumb" camera 110H which is tasked solely with collecting image 101 data, and corresponding sensor data 102, such as capture location (where applicable).

The platform(s) 110 can also be equipped with one or more device(s) 105. The devices 105 under different embodiments can perform one, some or all of the following functions: capture data 120, collect data 120, generate data 120, store data 120, process data 120, transmit data 120, delete data 120, discard data 120, secure data 120, and/or other data 120 related software or hardware instructions. For greater clarity, when referring to device(s) 105, it can also collectively refer to the applicable device(s) software 130 and hardware 103.

The device(s) 105 and/or platform(s) 110, and/or a combination thereof can include one or more processors 103A (for example, central processor unit(s) 103A, microprocessor(s) 103A, and/or other processor(s)), one or more graphics processor unit(s) 103B (for example, graphic card(s), integrated graphic processor(s), graphic chipset(s), tensor processing unit(s), field programmable gate array(s) (FPGA), application specific integrated circuit(s) (ASICs), neural processing unit(s) (NPUs), digital signal processor(s) (DSPS), vision processing unit(s) (VPUs), parallel processing unit(s), and/or other), one or more power related component(s) 103C (for example, power supply unit, battery(s), voltage regulator(s), capacitor(s), transformer(s), inductor(s), charger(s), converter(s), inverter(s), fuse(s), breaker(s), protector(s), and/or other), one or more volatile memory(s) 103D (for example, random access memory (RAM), dynamic RAM (DRAM), synchronous RAM (SRAM), video RAM (VRAM), cache(s), embedded RAM (eRAM), embedded dynamic RAM (EDRAM), embedded SRAM (ESRAM), low power double data rate (LPDDR RAM), and/or other), one or more non-volatile memory(s) 103E (for example, hard drive, disk drive, read only memory (ROM), programmable read-only memory (PROM), Flash Memory, embedded multimedia card (EMMC), universal flash storage (UFS), Non Volatile Static Ram (NVSRAM), erasable programmable read only memory (EPROM), electrically erasable programmable read only memory (EEPROM), NAND Flash, NOR Flash, Solid State Drive (SSD), Secure Digital (SD) Card, MicroSD Card, Compact Flash (CF) card, memory stick, USB Drive, Non-Volatile Random Access Memory (NVRAM) and/or other), one or more camera(s) 103F and/or image source(s) 103F (for example, digital camera(s), CCTV camera(s), image camera(s), video camera(s), webcam(s), smartphone camera(s), tablet camera(s), action camera(s), 360 camera(s), dashcam(s), surveillance camera(s), body camera(s), platform camera(s), panoramic camera(s), digital single lens reflex (DSLR) camera(s), thermal camera(s), time of flight camera(s), underwater camera(s), microscopic camera(s), infrared camera(s), night camera(s), microscopic camera(s), multispectral camera(s), hyperspectral camera(s), radar camera(s), LIDAR camera(s), satellite camera(s), aerial camera(s), ultrasound camera(s), microwave camera(s), panchromatic camera(s), wide angle camera(s), stereoscopic camera(s), multi-camera(s), pan-tilt-zoom camera(s), telescope camera(s), near-infrared camera(s), high resolution camera(s), and/or other camera(s)), one or more network interface(s) 103G (for example, Ethernet, wifi, Bluetooth, wimax, cellular, NFC, bus, SPI, I2C, UART, Modbus, ROS, MQTT, zigbee, z-wave, lora, sigfox, PLC, fiber optic, satellite, infrared, coax, thunderbolt, USB, serial, CAN, CANBUS, radio, mesh, GSM, LTE, 5G, TETRA, and/or other), one or more sensor(s) 103H (for example, position, orientation, magnetometer, inclinometers, gyroscope, accelerometer, barometer, thermometer, hygrometer, GPS, GNSS, laser, LIDAR, imager, telematics, solar radiation, energy consumption, occupancy, acoustic, air quality, rain, wind speed, wind direction, moisture, chemical, water level, water quality, microphone, near field communication, electro magnetic, Wi-Fi, Bluetooth, vibration, piezoelectric, rotational, tachometer, voltage, current, ultrasonic, multi-spectral, motion, pressure, proximity, light, ph, humidity, gas, temperature, flow and/or other sensors), and/or other component(s) 103I. It is recognized that the various component(s) could be integrated, combined and/or or separated to other component(s) in different embodiments.

It is recognized that the device 105 could have different embodiments, some performing simple data capture functions - for example, video recording device such as a dashcam 105 in a vehicle 110, whereas others could be complex and include a camera 101 utilizing Al capabilities to acquire, process, analyze, discard, prune, record, store, transmit, assess, and/or otherwise obtain image(s)/ camera 101 data and related sensor 102 data (where applicable). It is also recognized that in some embodiments, it may be that there are multiple device(s) 105 including at least one camera 101 and/or imaging source 101 that are performing the data recording function together. For example, a vehicle 110 with integrated cameras 101 can record to one or more device(s) 105. Under some embodiments, the device(s) 105 can also be equipped with special hardware component(s) 103B, 103I which can load and execute artificial intelligence capabilities (for example, through loading Al models and performing inference and/or Al operations). It is also recognized that device(s) 105 can be embedded onto platform(s) 110.

The device(s) 105 can also have software 130. The device(s) 105 software 130 can include some or all of the following software components: operating system(s) 130A, driver(s) 130B, Application(s) and/or App(s) 130C, software distribution(s) 130D, file(s) 130E, database(s) 130F, geospatial software 130G, artificial intelligence 130H, data processing 130I, audio processing 130J, image processing 130K, text processing 130L, read/write operations 130M, security 130N, communications 1300, other libraries 130P, other Al models 130Q and any other software component 130R applicable to the framed localization retrieval of source data 120, including those applicable for the collection and/or processing of images 120A, 120B and/or location data 120C. For greater clarity, when referring to device(s) 105, it can also include the applicable device software 130. It is recognized that in some embodiments the data 120 can be already present on, or only accessible from, third party system(s) 150, other server(s) 150, and/or other component(s), which would provide access to the source data 120.

The source data 120 from device(s) 105, platform(s) 110, other server(s) 150, and/or other component(s) 140 can include some or all of the following: image(s) 120A, video(s) 120B, sensor information 120C, associated data 120D (for example, metadata), data from databases 120F, audio data 120G, file data 120H, and any other data 120I that can be acquired, captured, collected, available, and/or generated on the source. The source data 120 can be copied to the server(s) 210, or otherwise made accessible to the server(s) 210 remotely for processing.

The source(s) data 120 can be transferred from the source 101, 105, 130, 110, 140, 150 to a server(s) 210 over a communication network(s) 190. The network(s) 190 can be wired or wireless.

The network(s) 190 can be point to point, peer to peer, serial, switched, routed, local area network (LAN) based, wide area network based (WAN), metropolitan area network based (man), pairing based, virtual private network (VPN), wireless local area network (WLAN), storage area network (SAN), campus area network (CAN), home network, enterprise network, and/or other networks, and/or a combination thereof. The network(s) 190 can use different underlying technologies (including mediums, frequencies, bands, transmission/receiving/signaling technologies, emitters/receivers, components, protocols, access control, security and other communication factors) - by way of example only these can include Ethernet, Wi-Fi, Bluetooth, Cellular (and versions of, such as 2G, 3G, 4G, 5G, XG), LTE, LTE-Advanced, Wi-Max, Satellite, Radio, NFC, mesh, Radio, RFID, Infrared, microwave, laser, different spectrum bands, fiber, copper, bus, can-bus, switches, routers, modems, firewalls, and other network(s), and/or a combination thereof. The network(s) can also include the internet. The network(s) 190 can be connected to each other, disjointed, and/or a combination thereof.

The communication network 190 can also composed of various network(s) 190 and data sources 101,105,103,130, 210,150,140 connected to the server(s) 210 directly and/or indirectly. The network(s) 190 can, in various embodiments, connect a variety of system 100 components to one another directly or indirectly, so long as they are equipped with a communication interface. For example, the networks 190 can connect device(s) 105 to camera(s) 101, device(s) 105 to sensor(s) 102, device(s) 105 to other device(s) 105 (whether same or different), device(s) 105 to platform(s) 110, device(s) 105 to other system component(s) 140, device(s) 105 to server(s) belonging to other systems 150, and device(s) 103 to system server(s) 210, and communications 190 between different components 101,102,105,130,103,110,210,150,140.

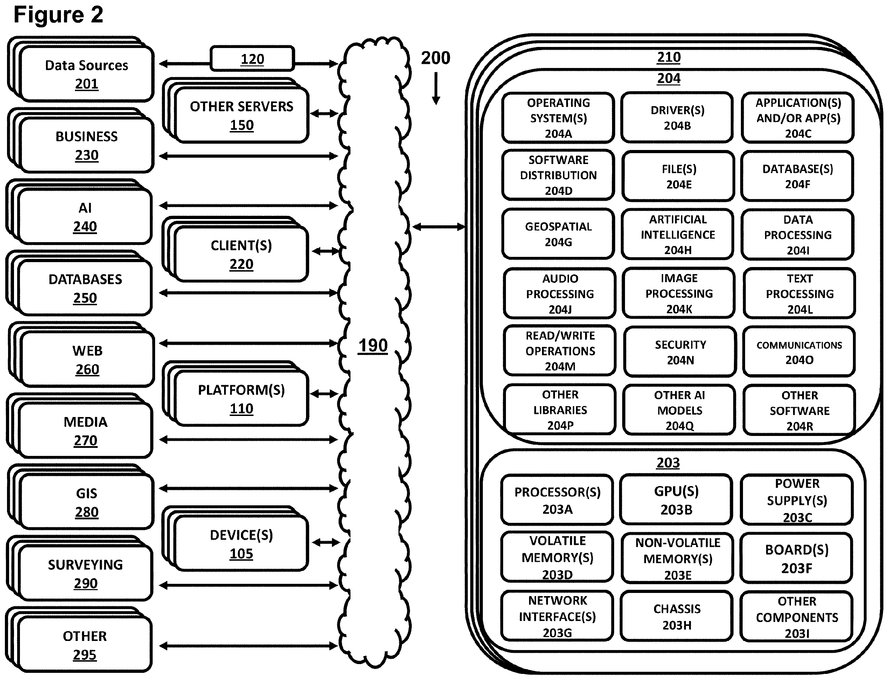

Referring to Figure 2 we depict an embodiment of the system's server(s) 210 in cooperation with communications over the network 190 with various system 200 components, as an embodiment of the system 100 components of Figure 1. The system 200 can include communications between the server(s) 210 and data source(s) 201, other server(s) 150, client(s) 220, platform(s) 110, device(s) 105, business systems 230, Al servers 240, external database(s) 250, websites and/or web services 260, media sources 270, Geographic Information Systems (GIS) 280, surveying systems 290, and other systems 295. It is recognized that the data sources 201 can be used to provide of the data 120, as accessible by the user interface(S) 295A,B,C as described herein.

The server(s) 210 can be configured as having a number of computing components 203 in a variety of ways to perform a variety of data processing functions. The server(s) 210 could be composed of one or more physical machines and/or one or more virtual machines, residing in one or more locations, and serving one or more purposes. The server(s) 210 can be segmented by load, function, geography, users, and/or other factors. The server(s) 210 can be hosted on premises (for example, at a vendor's site, service provider's site, or a customer site), can be hosted on a cloud, hosted in a data center, and/or combination thereof. For greater clarity, when referring to server(s) 210, it can also collectively refer to the applicable server(s) software 204 and computing hardware 203.

In relation to the hardware 203, the servers 210 can have a motherboard 203F, and/or other electronic board(s) 203F which can be used to facilitate the server(s) 203 computing functions. The server(s) hardware 203 can also have one or more processor(s) 203A, such as central processing unit(s) 203A, which can execute software instructions. The server(s) hardware 203 can also have one or more graphic processor(s) 203A, such as graphic processing unit(s) 203B, which can execute software instructions, including artificial intelligence operations. The server(s) 203 hardware can also have one or more power supply(s) 203C to facilitate powering of the server and its components. The server(s) 203 hardware can also have volatile memory(s) 203D for storing software instructions and data. The server(s) hardware 203 can also have non-volatile memory(s) 203E for storage of data. The server(s) hardware 203 can also have network interface(s) 203G for interfacing to one or more communication network(s) 190. The server(s) hardware 203 can have a chassis, enclosure or frame(s) 203H for housing the noted components and other components 203I. The server(s) hardware 203 can have a variety of other component(s) 203I, which can include some or all of the following: cooling systems, fans, raid controllers, host bus adapters, modules, backplane, cables, connectors, batteries, peripheral(s), controllers, and/or other server hardware 203 components 203I. It is recognized that the server(s) 203 can have multiple component(s) 203A-203I of the same type for various purposes including redundancy and performance. It is recognized that some of the examples provided in relation to device(s)' 105 hardware 103 could also be applicable to the server(s) 210 and vice versa.

The server(s) 210 software 204 can include some or all of the following software components: operating system(s) 204A, driver(s) 204B, Application(s) and/or App(s) 204C, software distribution(s) 204D, file(s) 204E, database(s) 204F, geospatial software 204G, artificial intelligence 204H, data processing 204I, audio processing 204J, image processing 204K, text processing 204L, read/write operations 204M, security 204N, communications 2040, other libraries 204P, other Al models 204Q and any other software component 204R applicable to obtaining and processing of source data 120, including those applicable for the collection and/or processing of image 120A, 120B and/or location data 120C.

The server 210 can obtain the data 120 from one or more data source(s) 201, whereas the data source(s) 201 can be camera(s) 101, sensors 102, device(s) 105, platform(s) 110, other server(s) 150, other component(s) 140, and/or a combination thereof. The data source(s) 201 can push the data 120 to the server(s) 210, the server(s) 210 can pull the data 120 from the data source(s) 201, or a combination thereof. In some embodiments (not shown), the data source 201 can be a person which is uploading the data 120 to the server 210, either by directly accessing the server 210 (physical or logically), or through a client 220 workstation, terminal and/or interface, for example in connection with operation of their device 105 with camera 101 (e.g. a smartphone).

It is recognized that there are many different embodiments of image, video and/or sensor data 120 collection device(s), platform(s), and/or technologies, which are provided by a variety of vendors, companies, providers, operators, research institutes, commercial entities, governmental entities or otherwise. It can be that the specific source of the data 201 is not specified, but that sufficient data 120 is available (for example, images and/or video with location information, or information that can be used to determine location or associated object). As such, the system 200 can include in different implementations different third party server(s) 150 which can provide this information. In any event, the data 120 can include image data advantageously provided as a series of individual images (e.g. image frames).

Client(s) 220 includes a combination of a physical and/or logical interface(s) for a person and/or application to interact with the system 100, 200. Client(s) 220 can be deployed on some or all of the following: workstation(s), desktop(s), laptop(s), smart phone(s), terminal(s), kiosk(s), appliance(s), equipment and/or other computing device(s). Client(s) 220 can include software interface(s) such as some or all of the following: application(s), app(s), web browser(s), browser(s), remote connection(s), program(s), and/or other software interface which connects a user and/or an application to some or all the system 100, 200 component(s) and/or server(s) 210.

Under some embodiments, the server(s) 210 will interface with business system(s) 230 (for example, system which perform a certain business service for an organization and/or an individual), which can include one, some or all of the following: Customer Relationship Management system(s), Asset Management System(s), Service Request System(s), Citizen Request Portal(s), 311 System(s), Enterprise Resource Planning System(s), Facility Management System(s), Customer Service System(s), Customer Support System(s), Field Service Management System(s), Document Management System(s), Dispatch System(s), Telematics(s), Community Portal(s), Ticket System(s), Chat System(s), Help Desk System(s), Road Patrol System(s), Incident Reporting System(s), Police System(s), Fire System(s), Municipal System(s), Land Registry System(s), Surveillance System(s), CCTV System(s), Surveying System(s), Fleet Tracking System(s), Video Surveillance System(s), and/or other system(s) which provide, and/or support the provision of services, which can include some or all of the following: (1) public services; (2) infrastructure management services; (3) asset management services; (4) work management services; (5) reporting services; (6) municipal services; (7) government services; (8) monitoring services and/or other services.

The service system(s) 230 can, in some embodiments, also provide the data source 201, and provide for example, access to image(s) 120 and/or supporting data 120. For example, a citizen reporting portal system 230 can have images 120 of various issues uploaded by the public and/or by staff, which can also include issue description data 120 and can also include location information data 120. An asset management system 230 can include records data 120 of assets (e.g. signs, structures, etc.) located in the images 120 (which can include asset description and location), and can also include inspection images 120. The service system(s) 210 can be hosted on premises, in data center(s) and/or on the cloud.

The system 200 can include local and/or remote interface(s/) (over the network 190) with artificial intelligence (AI) systems 240. The artificial intelligence system(s) 240 can be part of the system 200 servers 210 (see Figure 1), or they can be by third party providers. Example of third party providers of Al systems 240 are Microsoft, Google, OpenAl, Facebook, Amazon, NVIDIA, and other third party providers, ranging in all sizes. The Al systems 240 can include graphic processing units, tensor processing units, and/or other hardware which is used to process, and/or support the processing of data 120 using operations tailored for artificial intelligence analysis of the source data 120 (e.g. image processing functionality). The Al systems 240 can also have operating systems, drivers, applications, files, containers, and other software modules, which can be similar to the system servers 210. The Al systems 240 can have applications which are specific to the artificial intelligence operations, for example, loading Al models, taking input data, processing requests (using Al models) and/or generating output data. The Al systems 240 can also have application interface(s) or programs which connect the Al modules to other internal modules (for example, for managing the software, managing the operations, interfacing with files, interfacing with clients, interfacing with other servers, configuration, administration, security, data management, and other purposes). The Al systems 240 can also have application interface(s) and/or programs which connect the Al systems 240 externally and/or facilitate external (to the Al systems 240) use, for example, through web servers, sockets, API service(s), and/or other external interfaces, in which users, applications and/or the system servers 210 can interface with the Al systems 240.

The system 200 can also interface locally, and/or over the network 190 to database(s) 250, which can include information from other systems which can be processed by the system 200. The database(s) 250 can be, for example relational, SQL, NoSQL, in-memory, directories, real-time, time-series, graph, object oriented, geospatial, document and/or other types of database(s) and/or a combination thereof. It can be that some or all of the data in the database(s) 250 could be used by the system 200 for various purposes, such as to supplement its segmentation, configuration, processing, analysis, lookup, search, retrieval, and/or artificial intelligence functions, and/or combination thereof.

It can be that the system 200 interfaces over the network 190 with web servers 260 and/or web services 260, whereas information is served or is available through publicly facing and/or privately facing servers/services 260 which serve the information in one or more ways, for example, html, json, files, media, pages, APIs, web hooks, REST, end points, and/or other method(s) / protocol(s) / interface(s) which would allow to system to send and/or receive data and/or instructions.

It can be that the system 200 includes interface(s), locally and/or over the network 190 with media type data 120 from various media servers 270, such as news servers, news channels, social media, citizen reporting portals, internet forums, search engines, podcasts, emails, apps, stations, publications, channels, and/or other media which can be accessed by the system 200. In any event it is recognized that the media data 120 could include image data containing a series of individual frames as accessible by the user interfaces 295A,B,C.

The system 200 can also include interface(s), locally and/or over the network 190 with Geographic Information System(s) (GIS) 280. Such systems 280 can be used for urban planning, environmental management, transportation, health, emergency response, business and/or in other purposes which allow to use data spatially. The GIS systems 280 can be used to store data, manage data, manipulate data, analyze data, visualize data, output data, disseminate data, and/or in other ways. GIS data 280 can display captured data, for example, satellite imagery, multispectral imagery, oblique imagery, orthogonal imagery, LIDAR( (light detection and ranging) data, 3D models, vector data, raster data, point cloud data, aerial photos, street level images, and/or other data and/or a combination thereof. GIS data can also include human generated data which represent assets or data spatially. These can include, for example, point, line, polyline, multi-line, polygon, multi-polygon, multi-point, curve, multi-curve, ring, mesh, clusters and/or other spatial shapes/objects which can be used to represent assets and/or visualize data, and/or a combination thereof.

The system 200 can also include network 190 interface(s) with surveying system(s) 280, which can include for example information data 120 for asset surveying (i.e. roads, signs, lane markings, trees, properties, and/or other assets), which can include for example, an asset (or object) location and other properties of interest thereof (for example, id, location data, GIS data, asset data, inspection data, condition rating, comments, and/or other data). The surveying can be performed in person, by vehicle, aircraft, satellite, and/or other platforms 110, and/or a combination thereof. The surveying could be performed in the field (whereas data 120 is collected and then inputted into a system) digitally (whereas images, maps, and/or records are reviewed on a system), and/or a combination thereof. The surveying results and/or data 120 can be processed manually, partially automatically, in full automation, and/or a combination thereof. The surveying could be on a one time basis, continuous, a scheduled basis and/or a combination thereof. The surveying could also use AI, image processing, sensor data, and/or algorithms. Within a facility, or in places where it may not be feasible to depict assets or objects geospatially, surveying could include lists (for example, a list of all assets present in a building, and their location, for example, by room number, closet number, and/or other descriptions). Inspection system(s) 280 can mean, for example, systems which are meant to proactively identify and report issues with assets and/or comply with standards, regulations and/or bylaws. For example, a government authority may want to demonstrate that it is inspecting its roads every X days, and have records demonstrating the same.

It The system 200 can also include interface(s), localy and/or- over the network 190 with other system(s) 295 for various purposes, which can include services, data, and/or functions which can relate to, for example, none, some, or all of the following: (a) collecting data 120 from data sources 201 indirectly; (b) acquiring data 120 otherwise; (c) retrieving and/or sending data related to objects, assets, deficiencies, insights, or items of interest; (d) synchronization of data 120 across systems; (e) hosting, computing and/or data systems; (f) monitoring, diagnostics, alerts; (g) security and/or information security; (h) otherwise commercially available artificial intelligence systems and/or service which can support the system functions; (i) system administration, user enrollment, and/or other administrative system(s); (j) information security, authentication, availability, backup, and/or reliability system(s); (k) data scraping systems; (I) open data repositories; (m) and/or other system(s);

It is recognized that all references to components which can be, or include server(s) 201, 210, 150, 220, 240, 250, 260, 270, 280, 290, 295, and/or system(s) can relate to one or more server(s), which can be physical, virtual and/or a combination thereof, located in one or more locations, serving one or more purpose, and potentially interfacing in some capacity with other system(s) and/or server(s) which are not shown. The server(s) 210, 150, 240, 250, 260, 270, 280, 290, 295 can have various software modules and/or hardware modules, and can achieve similar functions in different ways and using different configurations. The server(s) 210, 150, 240, 250, 260, 270, 280, 295 can also have overlapping functions and/or serve multiple purposes. It is recognized that the system servers 210 can receive data from the servers 210, 150, 240, 250, 260, 270, 280, 295 but also send data or make available data to the severs 210, 150, 220, 110, 105, 230, 240, 250, 260, 270, 280, 290, 295. It is recognized that in some use cases, interfaces between server(s) 210, 150, 240, 250, 260, 270, 280, 290, 295 and server(s) 210, 150, 240, 250, 260, 270, 280, 290, 295 or system(s) and system(s) could be export of data from one and importing it to another (for example, in the form of a file which is exported/imported manually using programming, tools, and/or scripts).

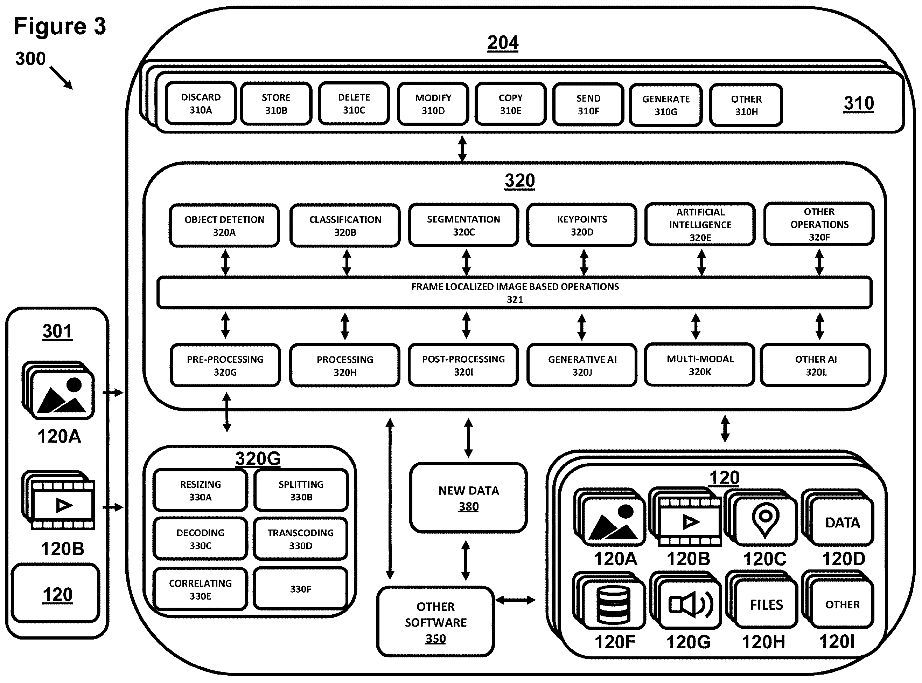

Referring to Figure 3 we depict an embodiment of Frame Localized Artificial Intelligence processing 300, as an embodiment of the systems 100, 200. The system 300 can obtain image(s) 120A and/or video(s) 120B from one or more sources, as obtained data 301. The obtained data 301 can be transferred in various means, for example, as files, file chunks, stills, raw data, media stream, messages and/or other means. The data 301 can also be encrypted, compressed, modified, segmented or amalgamated prior to being processed by the software 204. The transferred data 301 could, for example, be uploaded, downloaded, pushed, and/or pulled from the data sources 201, and/or a combination thereof. It is recognized that in addition to the various media 120A, 120B, additional information 120 (for example, localization information) can also be obtained as described herein.

The system's 300 software 204 can perform one or more frame localized image based operations 321 on the obtained media 120A, 120B, which can include processing instructions 320 such as but not limited to object detection 320A, image classification 320B, image and/or instance segmentation 320C, keypoints, landmarks and/or pose estimation 320D, artificial intelligence operations 320E, pre-processing operations 320G, processing operations 320H, post processing operations 320I, generative Al operations 320J, multi-modal operations 320K, other image and/or video processing operations 320F, other artificial intelligence operations 320L, and/or a combination thereof. It is recognized that the obtained media 120A,B (e.g. obtained data 301) contains image frames, such that the image contents of each of the image frames can be analyzed by the frame localized image based operations 321 in order to identify and/or assess various structures (e.g. objects such as signs, bridges, potholes, and other road based objects, for example) present within the digital image data contained in the image frame(s) of the obtained data 301.

It is recognized that some of the framed image processing instructions 320 noted can also have their own embodiments. For example, video(s) 120B transferred to the server (e.g. server 210) can utilize in some embodiments pre-processing 320G. This could mean that the video 120B would, for example, need to be resized 330A, split 330B (for example, to smaller video chunks or a sequence of image(s) 120A), decoded 330C, transcoded 330D, correlated 330K to metadata 120, or otherwise pre-processed 330G in a manner that prepares the video(s) data 120B into an appropriate format (e.g. a series of individual image frames) suitable for the localized frame processing 321.

While this embodiment demonstrates image 120A and/or video 120B based processing 320, it is recognized that additional processing 350 can take place with data 120 from other data sources 201. Alternatively, it could be framed on the same data 120 but for different purposes, and the image processing operations 321 can, with or without other software operations 350, create new data 380. It is recognized that the order of operations and transfer of data between different modules can vary depending on the application. For example, a video 120B can get broken down 320G to image(s) 120A, analyzed for potholes using object detection 320, with new metadata (for example, bounding box showing the location of the pothole in the image - not shown), then passed along to multi-modal Al 320K for assessment of the pothole repair priority, along with prompted request(s) - for example, to recommend the type of repair needed and/or assess the quantity of material needed, which could result in new data 380. For example, a list of bus stop locations 120F could be fed 350, 321 onto a multi-modal Al 320K along with localized 120C images 120A of bus stops 120 during and/or after a winter storm to determine 380 which transit stops have been plowed and which haven't. For example, to request recommendations 320J as to which areas 120C should be prioritized for salting after snow clearing is completed.

It is recognized that, to encourage use in public spaces and government environments, in some instances, the data 120 could be pre-processed 320G using artificial intelligence 320E operations, such as object detection, instance segmentation, and/or other operations that can localize objects such as faces, persons, license plates, vehicles, addresses, residential windows, residential properties, and/or other information that can be considered private (e.g. redaction) prior to being made available for FLAIR use by the system 100. This could be in the done on the device(s), platform(s), the server(s), and/or the applicable modules 204. It is recognized that redaction can also take place during processing 320H, and/or post processing of image(s) 320I. It is recognized that the original images 120A, 120B can be removed and/or replaced with images (120I) which redact the personal information, by example, through blurring and/or pixel substitutions. In other embodiments, the original image(s) 120A,120B, could be retained, but only the redacted image(s) 120I would be available externally, unless needed (for example, for issuing an infraction). It is recognized that the redaction can, for example, be an inherent part of the frame localized processing 320.

The software's 204 input data 301 and new data 380 (whether intermediate data generated during processing 321, 350, or final data which is used and/or presented to system users, and/or a combination thereof), can also be discarded 310A, stored 310B, deleted 310C, modified 310D, copied 310E, transmitted 310F, managed 310G, and/or used in different ways 310H, and/or a combination thereof.

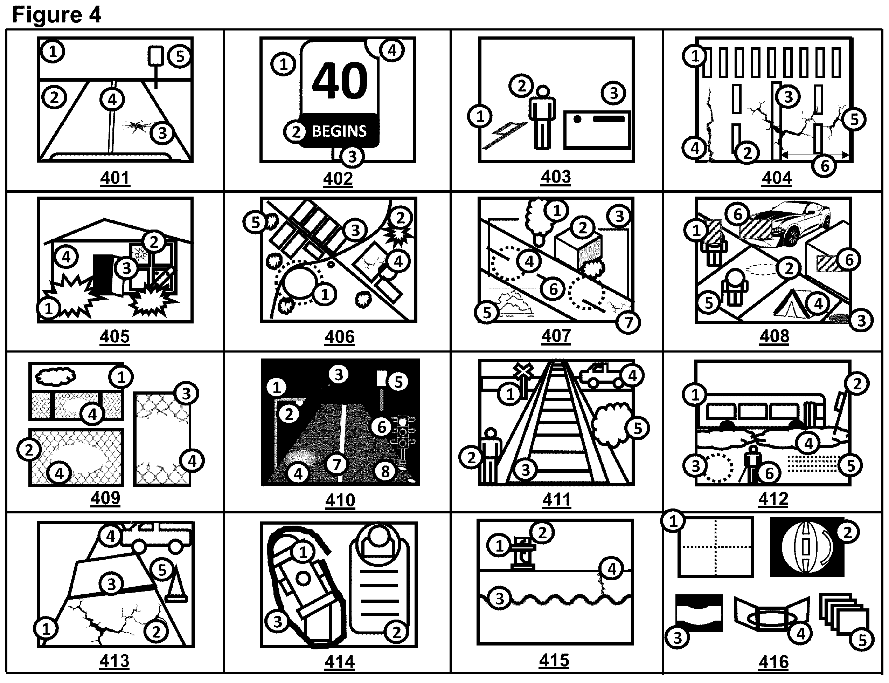

Referring to Figure 4 and Figure 1, Figure 4 depicts different examples 401, 402, 403, 404, 405, 406, 407, 408, 409, 410, 411, 412, 413, 414, 415, 416 of image(s) 120A frames and/or video(s) frames 120A which can be frame localized processed by the system 100 (for greater clarity, video files 120B being processed can also be covered under this embodiment, but for eliminating repetition, the example will refer primarily to images 120A). It is recognized that the data 120 can be provided as a series of frames suitable for digital processing by the framed image processing instructions 320.

As noted in Figure 1, one or more platform(s) 110 can be equipped with one or more camera(s) 101 and can capture various image 120A and/or video data 120B in various formats, from various perspectives, under various environmental conditions, under various lighting, and containing various objects such as but not limited to specified incidents, issues, conditions, assets, inventories, and/or information of interest, and/or a combination thereof. Said image(s) 120A can be frame localized for recognition in various ways, for various purposes, and with various results.

Sample image 401 depicts an image 120A captured from a vehicle 110E platform 110 using a dash cam perspective. The image 401 could be frame localized using the framed image processing instructions 320 in various ways, for example: to log the weather conditions (day/night, clear/partial cloud/cloudy, raining, snowing, etc.) 401-1 in the image 401; to search for objects of interest in the surrounding 401-2; to identify deficiencies (for example, pavement deficiencies 401-3 such as potholes, cracks, deformations, etc.); to inventory asset(s) (for example, lane markers 401-4 and/or signs 401-5) for inventorying, and/or assessing asset 401-4, 401-5 conditions; for determining visibility of an asset (for example, a sightline to a traffic sign 401-5); and/or for other purposes; and/or for other purposes.

Sample image 402 depicts a close-up image 120A of an asset (for example, sign 402-1, captured by a mobile device 110D), or a pre-processed cropped image 402 captured by a vehicle 110E. The system 100 can be used in various ways, for example: to determine in the image 120A ,as frame localized using the framed image processing instructions 320, any identified objects such as but not limited to the asset 402-1 category and/or subcategory, (for example speed 40, speed 50, stop sign, ec), whether by name or by code; to identify any related assets 402-2 (for example, sign tab 402-2, pole 402-3), to assess the condition of the asset 402-1 and/or related assets 402-2, 402-3 and identify any deficiencies 402-4 (for example, sign damaged or bent); and/or for other purposes;

Sample image 403 depicts an image 403 of a transit stop captured from a bus 110E as it drives across bus stops. The image 403 could be analyzed in various ways as frame localized using the framed image processing instructions 320, for example: to identify objects such as but not limited to asset(s) (for example, a bus stop sign 403-1 and a waste bin 403-3); to identify issues at the transit stop (for example, a fallen sign 403-1); to determine occupancy and/or facility use at the stops (for example, determining the number of people 403-2 at a stop, determining if they are using stop amenities, etc.); and/or for other purposes.

Sample image 404 depicts a high resolution orthogonal image 120A of road infrastructure captured by a satellite 110C, a plane 110B, or a drone 110A. The image 403 can be processed in various ways as frame localized using the framed image processing instructions 320, for example: to assess the infrastructure for instances of failures (for example, linear cracks 404-4, alligator cracks 404-5 and/or other failures); to determine the position and/or condition of related objects (for example, linear lane markers such as dashed white 404-2, solid yellow 404-3 and/or transversal lane marker(s) such as crosswalks 404-1); to measure the linear, area or volume dimensions of objects in images (for example, to determine the width 404-6 of the road); to derive new data, such as a pavement rating score (not shown) and/or lane marker deficiencies (not shown); and/or for other purposes.

Sample image 405 depicts a street level imagery 120A of a residential property acquired by a vehicle 110E, or a hand-held system 110H, or obtained a cloud based citizen complaint portal 110I. The frame localization using the framed image processing instructions 320 could be applied in various ways, for example: to retrieve the condition of the property (for example, assessing the quality and/or value of the exterior finish 405-4 of the property); to recognize deficiencies in the property (such as, for example, broken door 405-3, broken window 405-2, or other deficiencies); to recognize bylaw infractions, such as lack of lawn maintenance 405-1; to retrieve newly generate data, such as a property quality rating (not shown) which could be used, for example, to refine the estimated value of the property; and/or for other purposes.

Sample image 406 depicts an orthogonal image 120A of road infrastructure captured by a satellite 110C or a plane 110B. The artificial intelligence included in the framed image processing instructions 320 could be utilized in various ways, for example: to identify variations in images 406, such as flooding 406-1; to alert about noxious, sick, and/or invasive vegetation species 406-2; to measure urbanization and building within a city and/or an area (for example, by measuring the surface area of all buildings 406-3); to pinpoint / determine the GIS coordinates of assets (for example, municipal trees 406-5); to measure canopies of trees for determining green space 406-5 within an area or a municipality 5; to identify building and/or infrastructure failures (for example, cracking 406-2 and/or water ponding 406-4); and/or for other purposes.

Sample image 407 depicts an oblique aerial imagery 120A captured by a drone 110A of an urban area. The imagery 120A could be frame localized using the framed image processing instructions 320 in various ways, for example: to identify and/or classify the types of asset(s) present in the image and their location (for example, trees 407-1, buildings 407-2, lighting poles 407-3, lane markers 407-6); to assess performance, compliance and/or coverage of certain requirements (for example, to identify and/or assess the lighting coverage on a road 407-4 or in a particular area); to identify incidents, hazards or bylaw compliance issues (for example, to identify illegal garbage dumping 407-5); to identify infrastructure issues (for example, to identify cracking on infrastructure 407-7); and/or for other purposes.

Sample image 408 depicts an image 120A extracted from video surveillance camera 110G footage of a public space. The artificial intelligence could be employed using the framed image processing instructions 320 in order to frame the image 120A in various ways, for example: to determine whether the area is occupied or not occupied (for example, by identifying if any people 408-1, 408-2 are in the image or none); to redact personal information, such as faces 408-1, license plates 408-2, home address 408-7, and other private information); to determine the level of occupancy in an image (for example, by counting the number of persons 408-1, 408-2 in an area); to determine the demographics of persons 408-2 in an area (for example, age range, gender, ethnicity); to identify hazards in an area (for example, the formation of ice 408-2, open manholes 408-3), to identify bylaw infractions, social issues, or requirement for intervention (for example, detecting encampment(s) 408-4 in an area, illegal parking 408-6, encroachment, 408-6); and/or for other purposes.

Sample image 409 depicts a captured image 120A acquired by a hand-held digital camera 110H, or captured by a smart phone device 110D (or a tablet) 110D, or obtained via an inspection system 110I, or captured on a side view from a train 110J, or otherwise uploaded 110L to the system. The image 409 could be of a wide angle view 409-1, regular view 409-2, or a zoomed-in view 409-3. The image can be in portrait mode 409-3 or in landscape mode 409-2. The image 410 could include for example, an instance of a deficiency in an asset (for example, a fence), whereas the deficiency is a cut hole 409-4 in the fence 409-4; and/or for other purposes.

Sample image 410 depicts an image 120A captured from a vehicle 110E platform 110 using a dash cam perspective at night. The information retrieved by the framed localization system 100 could vary in scope and applications, for example the image 120A could be frame localized using the framed image processing instructions 320: to determine the location of asset(s) at night, such as lighting poles 410-1; to determine whether assets are powered, (for example street lighting 410-2 or traffic signals 410-6 are functioning at a specific time or functioning at all, and whether the street lighting 410-3 or traffic signal lighting 410-6 is not functioning on a particular time or functioning at all; to determine luminance level of bulbs 410-2, 410-6; to determine retro reflectivity of lane markers 410-7 or signs 410-5; to determine position of light reflectors 410-8 and intensity of reflections; to view which areas are lit 410-4; to generate night visibility scores (not shown); and/or for other purposes.

Sample image 411 depicts an image 120A extracted from a train 110J platform 110 using a windshield mounted perspective. The data retrieval system 100 could be used in various ways, for example the image 120A could be frame localized using the framed image processing instructions 320 to: extract image(s) and corresponding location(s), which could be used to identify, inventory and/or assess assets along the train tracks (for example, signage 410-1 or signaling equipment); to generate alerts and records about near misses with pedestrians 410-2 or vehicles 410-4 along the tracks; to determine which locations require trimming of vegetation overgrowth 410-5; to inspect the condition of the train tracks 410-3; and/or for other purposes.

Sample image 412 depicts an image 120A from footage retrieved from a CCTV system 110J platform 110 of a transit stop. The framed localization system 100 could analyze the image(s) 120A and/or footage 120B as frame localized using the framed image processing instructions 320 to: determine at which location a bus 412-1 stops at a bus stop; to determine if there are any potential issues, such as a leaning sign 412-2; to determine whether there is ice 412-3, snow 412-4, and/or water pooling at the stops; to determine whether the stop was maintained, for example, by salting 412-5 it during winter and/or clearing snow 412-4; to identify whether there are any persons 412-6 (including persons with mobility problems), and whether they experienced any issues; and/or for other purposes.

Sample image 413 depicts an image 120A obtained from a robotic 110K sidewalk 413-2 inspection platform 110, whereas a footage 101, 120B along with corresponding location data 102 was uploaded to the server(s) 210 and processed. The information extracted from the video 120B could be frame localized using the framed image processing instructions 320 in various ways, for example: to rate the condition of the sidewalk 413-1 and identify distresses along the way (for example, cracks 413-2, deformations 413-3, and other distresses); to provide warnings about hazards (for example, trip edges 413-3); to provide alerts about bylaw infractions (for example, encroachment of a vehicle 413-4 onto sidewalk 413-3); to determine whether a hazard is flagged (for example, through warning cone 413-5, hazard tape, or spray paint); and/or for other purposes.

Sample image 414 depicts an image 120A scraped from a social media system 110I or a citizen engagement portal 110L. The system could process the image 120A as frame localized using the framed image processing instructions 320 in various ways, for example: to identify the issue reported (for example, a damaged fire hydrant 414-1); to determine which object is marked in an image 414-3 (for example, a fire hydrant 414-1); to extract corresponding text from images 414-2; and/or for other purposes.

Sample image 415 depicts an image 120A obtained from a water based platform 100, such as a boat; the surveying system 100 could process the image 120A as frame localized using the framed image processing instructions 320 in various ways, for example; to identify asset(s) (for example, mooring 415-1); to assess the condition of assets, (for example, identifying signs of rust 415-2); to identify and log infrastructure issues (for example, cracks 415-4); to determine the water level 415-3; and/or for other purposes.

Sample images 416 depict other format(s) of images 120A, for example: multiple images which are stitched together 416-1; fish eye image(s) 416-2 and/or 360 images 416-3; panoramic image(s) 416-3; monoscopic, stereoscopic, or multiscopic 416-4 image(s) whether captured in a synchronized manner or not; multiple image(s) depicting the same scene from multiple perspectives 416-4; multiple image(s) which are processed together using the framed image processing instructions 320 (whether in sequence or concurrently), whether synchronized or not, whether for the same purpose or not; whether de-warped or not; whether padded or not;; and/or for other purposes. The examples noted in 401-416 are simply meant to demonstrate possible embodiments are not meant to be used as limitations.

The frame localization system 100 can perform, for example, at least one, some or all of the following, by advantageously using the framed image processing instructions 320 to process the image(s) 120A:
(a) Process image(s) 120A and video(s) 120B from one or more platforms 100; and/or
(b) Process image(s) 120A and video(s) 120B from one or more perspectives; and/or
(c) Process image(s) 120A and video(s) 120B of one or more zooms (including various levels of zoom), for example, optically zoomed, digitally zoomed, and/or unzoomed; and/or
(d) Process image(s) 120A and video(s) 120B of one or more pixel dimension format(s), for example, 720P, 1080P, 4K, 8K, Ultra-wide, square, and/or panoramic; and/or
(e) Process image(s) 120A and video(s) 120B of one or more file formats for example, bmp, gif, jpg, png, tiff, mp4, avi, mov; and/or other file formats; and/or
(f) Process image(s) and video(s) which are compressed (including various levels and/or algorithms of compression) or uncompressed; and/or
(g) Process image(s) 120A and video(s) 120B of one or more light spectrums;
(h) Process image(s) 120A and video(s) 120B of one or more color spaces, for example RGB, YUV, HEX; and/or
(i) Process image(s) 120A and video(s) 120B which are unmodified, or modified (for example, by original platform(s) and/or system(s) on which they were captured), by way of example, modified can mean: (1) image(s)/video(s) or portions thereof are blurred; (2) pixels are substituted on image(s)/video(s); (3) image(s)/video(s) are cropped and/or padded; (4) image(s)/video(s) are stitched together; (5) image(s)/video(s) are enhanced (for example, through filters, algorithms, and/or generative AI); (6) image(s)/video(s) are encoded; (7) image(s)/video(s) are transcoded; (8) image(s)/video(s) are compressed; (9) image(s)/video(s)which are annotated or marked by a person or software; (10) image(s)/video(s)which are labelled with text; (10) image(s)/video(s)which are labelled with text and/or
(j) Describe what is in the image(s) 120A and video(s) 120B; and/or
(k) Search for image(s) 120A and video(s) 120B which meet a specified prompt and/or criteria; and/or
(l) Identify asset(s) in image(s) 120A and video(s) 120B; and/or
(m)Assess the condition of asset(s) in image(s) 120A and video(s) 120B; and/or
(n) Identify hazard(s) in image(s) 120A and video(s) 120B; and/or
(o) Extract text from image(s); and/or
(p) Mark image(s) 120A and video(s) 120B with annotation(s), including at least one, some or all of the following: (1) labels; (2) detection boxes; (3) key points; (4) landmarks; (5) poses; (6) polygons; (7) masks; (8) scribbles; (9) text; (10) metadata; and/or
(q) Process image(s) 120A and video(s) 120B independently (whereas one image is not related to another image), in sequence or parallel;
(r) Process image(s) 120A and video(s) 120B in a relational manner (whereas one image is related to another image), in sequence or parallel;
(s) Process image(s) 120A and video(s) 120B together with other data 120, such as image(s) 120A, video(s) 120B, sensor data 120C (which can include location data), image metadata 120D, data residing in database(s) 120F, audio data 120G, data residing in files 120H, and/or other data; and/or
(t) Retrieve image(s) 120A and/or video(s) which meet specified criteria associated with said image(s) and/or videos; and/or
(u) Retrieve image(s) 120A and/or video(s) which meet specified criteria not yet associated with said image(s) and/or videos; and/or
(v) Other image related functions.

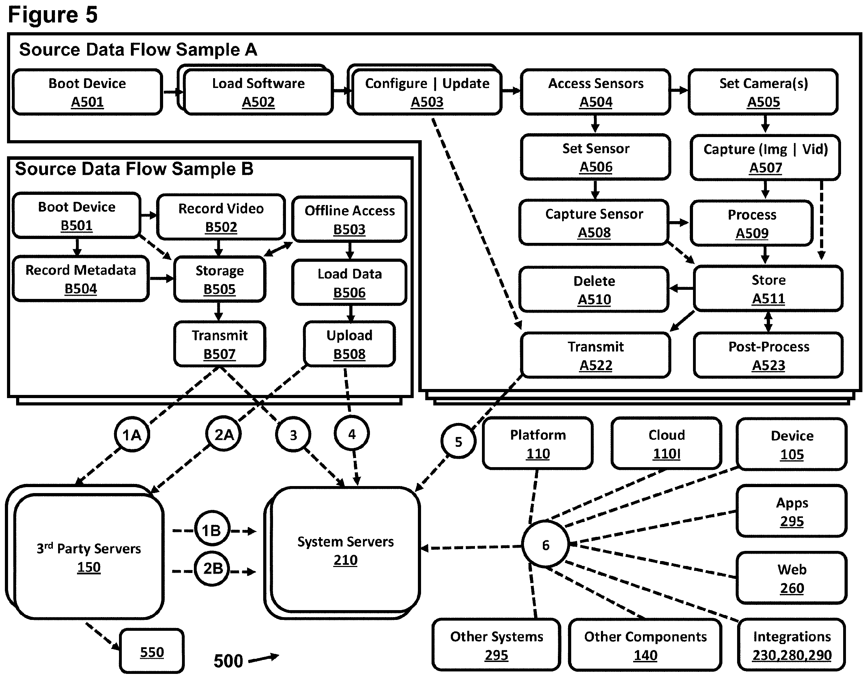

Referring to Figure 5 and Figure 1, we depict a system embodiment 500, as an embodiment of the system 100 of Figure 1, which collects source data 120 from various data sources 110, 110I, 105, 295, 260, 230, 280, 290, 140, 296, and two sample image acquisition flows, A and B. Referring to flow sequence B, the sequence of events B could have various steps with variations thereof. For example, the system 500 could be a dash camera 101 deployed in a vehicle 110E and powered on. Once powered on, the camera 101 could boot on B501 and start recording video B502 onto a local media storage B505. The camera 101 could also record metadata B504 information, including location coordinates B504 (and potentially other sensor information B504) onto a corresponding media storage B505, for example in a file format such a TXT file, CSV file, or onto a database. The captured information could be transmitted B507, 1A to a server 150 periodically, on demand, on request, and/or on a push or pull basis, and/or a combination thereof. The data 120, could be made available to 3rd party server 150 user through a 3rd party client 550. However, some or all of the source data 120 available on the 3rd party servers 150, whether modified or not, could also be made available to the system servers 120 through a form of access or integration 1B. The source data 120 could be transmitted B507 directly 3 from the camera 101 to the system server(s) 210 (either whereas the camera 101 is a native part of the system 210, or through direct 3 integration between the system servers 210 to the camera 101. In another embodiment the camera 101 can turn on B501 and immediately access the storage B505 to transmit B507 data 120 to the system servers 210 through 3rd party servers 1A,1B. In another embodiment, the image capture source 101 can boot on B501, and immediately access its local storage B505 to transmit B507 the source data 120 to the system servers 210. In another embodiment, a person may remove the storage B505 from the camera 101 for offline access B503, whereas the storage media (for example, hard drive, solid state drive, solid state memory, micro SD, miniSD, SD, USB, flash drive, or otherwise) is connected to another device (not shown) whereas the data 120 is copied and/or loaded B506 and manually uploaded B508 to the system servers 210 directly 4, or indirectly 2A, 2B through a third party system 150.

Referring to source data workflow sample A, a computing device 105 can be installed on a platform 110 (for example, a vehicle 110A or a locomotive 110J). The intelligent device 105, for example, can be switched on manually and/or power on automatically. Once the device 105 is powered on, the device 105 can follow a variety of pre-programmed, configurable, and/or hard coded steps. The device 105 can initiate its boot sequence A501 and proceed to load A502 necessary software such as operating system, drivers, and applications. The device 105 can check and/or apply for configuration and/or updates A503 for none, some or all of its software(s). The device 105 can have a variety of sensors which it can access A504. For example, the device 105 can access a camera A505 by example, through requesting a video stream with certain parameters A505. Similarly, the device 105 can, for example, access one or more sensor(s) A506 (such as location sensor A506, for example), through requesting a sensor A506 based on certain parameters A506. The device 105 captures images and/or videos A507, and corresponding sensor information A508. The device 105 can also process A509 the data (for example, images, video(s), location, and/or sensor information) in a variety of ways, which can include, for example, image processing operation(s), artificial intelligence operation(s), inference(s), and/or other operation(s), which can be performed in series and/or in parallel, which can keep the data at its original form, modify the data, generate new data, redact data, extract data, remove data and/or a combination thereof. The data can be stored A511 at its unprocessed form A507, A508, in a processed form A509, or a combination thereof on a local storage media A511. The data can be also post-processed A523 in variety of ways, after being stored A511 (for example, first being captured as video files, which are then processed for example to extract frames by location, metadata and/or description). The collected information 120 can also be transmitted A522 to the servers 210 directly 5, or indirectly (not shown), through 3rd party servers 150. The data 120 on the device A511 can also be deleted and/or discarded A510 based on conditions (for example, age, location, first in first out, last in first out, whether it was sent, whether it was marked for deletion, and/or other conditions). The flow diagrams A,B, simply depict two possibilities of hardware workflows, with some possible variations, which end up sending source data 120 to the system servers 120, but it is recognized that there can be a plurality of devices 101, 105, with different software, hardware, and/or a combination thereof, that can communicate with the system server(s) 210 directly and/or indirectly. Other examples that can provide data 120 directly and/or indirectly to the server(s) can include technology- platform(s) 110, on premises and/or cloud system(s) 110I, device(s) 105, application(s) 295, web server(s) 260 and/or web client(s) 260, integrations with various systems 230,280,290, other component(s) 140 which host image(s) and/or video(s), and/or other systems 295 which host image(s), video(s), location information and/or a combination thereof.

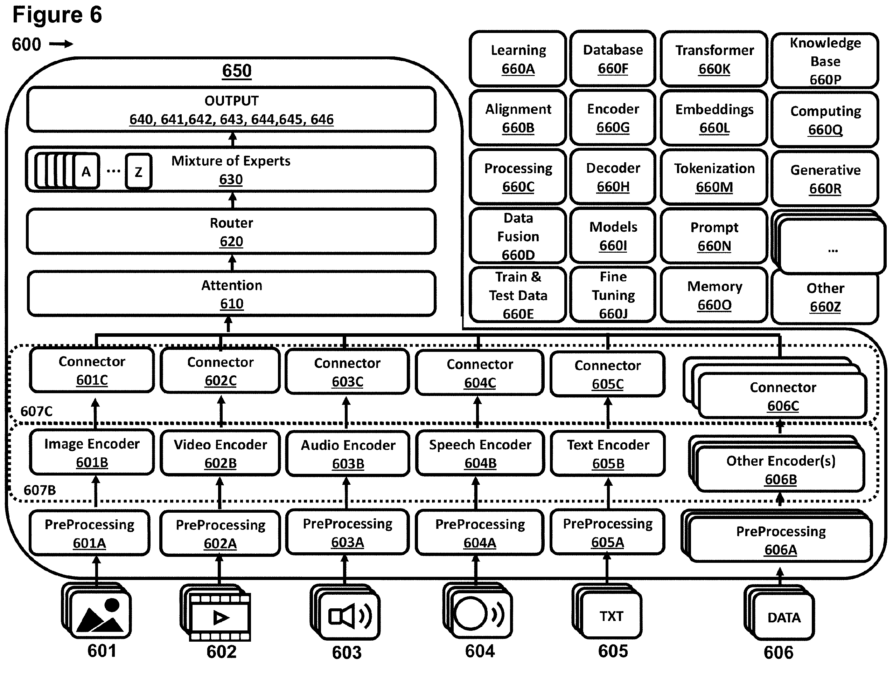

Referring to Figure 6, the figure depicts sample embodiments 600 of multi-modal artificial intelligence system 650, which can be utilized by / incorporated in the framed image processing instructions 320 as described herein. In particular, the multi-modal artificial intelligence system 650 is advantageously leveraged by the system 100 to process the data 120, as obtained, in order to identify objects and other specified image features desired for detection / identification, as desired.

Examples of multi-modal artificial intelligence system 650 can include OpenAl ChatGPT, Google Gemini, Facebook LLAMA, (and variations and/or version thereof) and other providers of multi-modal models and/or services. The multi-modal Al system 650 can take as input a variety of input data formats, which can include one, some or all of the following: (a) image(s) 601; (b) video(s) 602; (c) audio 603; (d) speech 604; (e) text 605; and/or (f) other data 606. Examples of other data 606 can include sensor data 606, geospatial data 606, database data 606, multi-spectral data 606, tables 606, graphs 606, readings 606, and/or other data 606, and/or a combination thereof. While the example multi-modal Al 650 includes certain sample steps/components, it is recognized that additional steps could be added, or that some steps can be removed, and/or that the order of operations and/or type of operations can vary. The multi-modal Al 650 can have internal, external and/or a combination thereof of pre-processing functions. FImage(s) 601 can require pre-processing 601A, such as, for example, resizing 601A, normalization 601A, scaling pixels 601A, cropping 601A, color space conversion 601A, and/or other pre-processing steps 601A. Video(s) 602 can require pre-processing 602A, such as, for example, frame extraction 602A, resolution adjustment 602A, normalization 602A, scaling pixels 602A, intra-frame processing 602A, inter-frame processing 602A, video segmentation 602A, transcoding 602A and/or other pre-processing operations. Audio 603 can require pre-processing 603A, such as, for example, resampling 603A, noise reduction 603A, normalization 603A, silence removal 603A, feature extraction 603A, segmentation 603A, transcoding 603A, and/or other pre-processing operations. Speech 604 can require pre-processing 604A, such as, for example, resampling 604A, noise reduction 604A, normalization 604A, silence removal 604A, feature extraction 604A, transcoding 604A, speech segmentation 604A, diarization 604A and/or other pre-processing operations. Text 605 can require pre-processing 605A, such as, for example, tokenization 605A, lower-casing 605A, upper-casing 605A, removing common but non-informative words 605A, removing white spaces 605A, stemming/lemmatization 605A, vectorization 605A, and/or other pre-processing operations. Other input data 606 can require pre-processing 606A, such as, for example, normalization 606A, scaling 606A, encoding 606A, handling missing value 606A, aggregation 606A, alignment 606A, and/or other data pre-processing operations. These pre-processing operations 601A,602A,603A,604A,605A,606A can help to ensure that the data 601-606 is entered into the multi-modal Al in an appropriate format to be used. It is recognized that none, some or all of the pre-processors 601A-606A could be merged in part or in full, and that some none, some or all of the pre-processors could be broken down to more modules. It is recognized that in some embodiment(s), the none, some or all of the data may not require any pre-processing. Pre-processing of input data 601-607 and/or minimization of output data 650, could also be done to optimize cost(s) and/or processing capacity - for example, by minimizing the number of inputs/outputs, dimensions, size, resolution, quality, number of rows, number of columns, number of files, number of fields, number of API calls, number of tokens, number of requests, or other factors that can affect costs and/or processing capacity.

The input data 601-606, once suitable for use by the multi-modal Al system 650, can then be encoded 601B,602B,603B,604B,605B,606B (601B-606B). As the data 601-606 can be provided to the multi-modal Al 605 in different formats, standardization of the data 601-606 across the different mediums is required so that it can be used for training and/or inference. The encoder(s) 601B-606B can be separate for each data type, and adapted/connected subsequently. Alternatively, none, some or all of the encoder(s) 601B-606B can be replaced by a multi-modal encoder 607B which would provide uniform embedding format for multi-format input (including some or all of the inputs 601-606).

Encoder(s) can include image encoder(s) 601B, for example, Convolutional Neural Networks (CNNs), Vision Transformers (ViT), Contrastive Language-Image Pretraining (CLIP), Detection Transformers (DETR), and/or others. Encoders can include video encoder(s) 602B, for example, such as SlowFast networks, Time-Space Transformers (TimeSformer) and/or others. Encoder(s) can include Audio Encoders 603B, for example, Wave to Vector (Wav2Vec), Vector Quantized Variational Autoencoder (VQ-VAE), and/or others. Encoder(s) can include speech 604B encoder(s), for example, Wave to Vector (Wave2Vec), Speech-Transformer, Recurring Neural Network (RNN) for Automatic Speech Recognition (ASR), Transformer Transducer, ContextNet, Convolution Augmented Transformer (Conformer), Hidden Unit BERT (HiuBERT), Transformers with Attention Heads (Triton), SpeechBERT, End-to-End Speech Processing Toolkit (ESPNET), DeepSpeech 2 with Transformer and/or others. Encoders can include text encoder(s) 605B, for example, Bidirectional Encoder Representations from Transformers (BERT), Generative Pretrained Transformer (GPT), RoBERTa (Robustly optimized BERT), Text-To-Text Transfer Transformer (T5), DistilBERT, A lite BERT (ALBERT), and/or others.

Further to the above, the encoder(s) can include other encoders 607B, multi-modal encoders 607B, temporal encoders 607B, spatial encoder(s) 607B, autoencoder(s) 607B, and/or others. For example, Contrastive Language-Image Pretraining (CLIP), Aligning Image and Language Representations (ALIGN), A Foundational Language And Vision Aligned Model (FLAVA), Universal Image-Text Representation (UNITER), VisualBERT, Vision and Language Transformer (ViLT), Learning Cross-Modality Encoder Representations from Transformers (LXMERT), Enhanced Representation through Knowledge Integration (ERNIE-VIL), Object Semantics Aligned Pre-Training (OSCAR), Multi-lingual multi-modal pre-trained modes (M3P), Unified Vision-Language Pretraining (VLP), Align Before Fuse (ALBEF, Multi-modal Augmented GPT (MAGMA), Text-Aware Pre-Training (TAP), VideoBERT, Cross-modal COTraining (COOT), Unified Vision-Language Pre-training (UniVL), ClipBERT, Action Bert (ActBERT), VideoCLIP, Frozen in Time, Temporal Alignment with Contrastive Learning (TACo), Multi-Modal Fusion Transformer (MMFT), Language-Aware Video-based Transformer Encoder-Decoder Representations (LAVENDER) and/or other encoder(s). The encoder(s), or variations thereof, can also be called Language Models, which can also include size (For example, very small, small, medium, large, very large, or other quantifiable measure).

The encoders 601B-607B can extract features from the data 120 (e.g. provided data 601-606) and generate embeddings 660L. If the embeddings 660L are not unified, a connector and/or adapter could be required to unify the encodings onto a shared format. In relation to multi-modal system 650 usage, the embeddings 660L from the various encoders 601B-606C can be projected, connected, adapted, and/or transformed onto a unified space 607C. This can be done individually 601C,602C,603C,604C,605C,606C through a connector 601C-606C, adapter 601C-606C, transformer 601C-606C, and/or projector 601C-606C per encoder(s) 601B,602B,603B,604B,605B,606B, or the embeddings 660L can be already unified 607C using a multi-modal encoder 607B. For example, the embedding(s) 660L for the text of the word cat, and for an image of a cat, for the sound a cat makes, and/or for speech of the word cat, could have embeddings 660L which are similar (essentially capturing the essence of the image, text, or sound, being the same object). This can be done, for example, through method(s) or techniques such as Data Fusion 660D, alignment 660B in shared space, concatenation, attention 610, and/or other methods, and/or a combination thereof.

In relation to attention 610, attention 610 can be self-modality attention 610 (referring to one input type at a time 601, 602, 603, 604, 605, 606), or cross-attention 610 (referring to multiple input types at a time, for example, an image 601, and a corresponding description 605). The attention 610 and unification of embedding 607C can involve queries, vectors, keys, and value(s).

The multiple input and/or output type artificial intelligence system 650 model 660I can have self-attention 610 layers which are trained 660A on text 605 separately (for example, finding relationship between words, such as the combination of the words "black cat" describing a cat that is colored black). The multi-modal 650 model 660I can have self-attention layers which are trained 660A on image(s) 601 separately (for example, understanding the relationship of different features within an image 601 of a black cat). The cross-modal 650 model 660I can have self-attention 610 layers which are trained 660A on other data, such as video(s) 602, sounds 603, speech 604, and other data separately for each. The training data 660E can be broken down to smaller chunk(s) which can be used by the model 660I architecture and/or computing available 660Q. This breakdown can occur for the whole dataset, whereas the dataset 660E is broken down to specific chunks, on a data instance (for example, a large picture broken down to cropped partitions), and/or both. Some data 660E can also be used for testing 660E the model(s) 660I, allowing to quantify and select promising model(s) 660I for further use. The integrated 650 model can also have cross-attention layers, whereas the data from the different modalities can be fused, for example, whereas unified 605C encoded 660G text embeddings can also be used to describe contextually similar unified encoded 603C image(s) embeddings. Due to methods such as cross-attention, alignment, unification, fusion and/or other similar method(s), cross-modality functions can be possible - for example text embeddings can be decoded to an image, and image embeddings can be decoded to text. This could apply to other types of modalities, channels, inputs, and/or outputs as well.

The cross-functional Al 605 can be a very large network 660I, trained with X (millions, billions, trillions, and/or other figure) of parameters on very large dataset. Multi-Multi-purpose Al 605 can be also smaller with less parameters so it can run on devices 105. Mixture of Experts (MoE) 630 can logically break the model 660I in different ways. For example, MoE 630 can be multiple models 660I which are trained on the same data space 660E, or on separate data spaces 660E, and which can perform differently on different requests. MoE 630 can also be one very large model 660J, which has multiple expert(s) 630A...Z which are trained on the same data space 660E, or on separate data spaces 660E, and which can perform differently on different requests. One or more expert(s) 630A...Z, model(s) 650I can then be used to solve 640 a problem. The result 640 can be based on one or more model(s) 660IA working together, whereas the output 640 is an amalgamation of the result(s) of one, some or all of the model(s) 660I. The result 640 can be based on one or more model(s) 660I (for example, top 2 models for a specific request), whereas the top one or more model(s) 660I generate the output 640. The result 640 can be based on one or more experts(s) 630A...Z working together, whereas the output 640 is an amalgamation of the result(s) of one, some or all of the experts(s) 630A...Z. The result 640 can be based on one or more experts(s) 630A...Z (for example, top 2 models for a specific request), whereas the top one or more experts(s) 630A...Z generate the output 640. The selection of the model(s) 660I, Expert(s) 630A..Z, and/or a combination thereof can be done by a router 620. The router can select the expert(s) 630 / model(s) 660I in one or more different ways, for example by softmax gating, top-k gating, hard routing, load-balancing, hash routing, learned routing, reinforcement based routing, and/or other methods, and/or a combination thereof. The routing 620 can also consider other factors, such as, for example, load balancing, scalability and/or other factor(s). The use of a router 620 can help to provide preferred results 640 in terms of qualit and/or in terms of processing performance. While the concept of flexible Al system 650 is large and complex, the Al system 650 can also use none, one, some, or all of the following, in full or in part:
(a) Machine Learning 660A technologies, whereas, for example, the multi-modal Al 650 is trained 660A on large dataset(s) which support different types of input data 601-606.
(b) Alignment 660B, whereas, for example, embeddings are aligned on a single modal, or multi-modal space for training, inference and/or decoding.
(c) Processing 660C, whereas, for example, the multi-purposed Al 650 interacts with other internal and/or external software required for it to complete its task.
(d) Data Fusion 660D, whereas data, for example, (whether source data 601-606, or generated data such as unified embeddings 601A-606C) is fused into a format which can be used by the multi-source AI 650.
(e) Training data 660E is data 660E of a certain quality (for example, scraped from the internet or from credible source, augmented, reviewed by person and/or annotated by a person, and/or generated by AI, and/or a combination thereof) which the multi-modal Al 650 can use to for its machine learning 660A process. Test data 660E is data 660E which is used to establish the quality of the model 660I.
(f) Database 660F can mean a source of data 660F which is organized in a structured manner. Database can refer to input data 601-606, which can be used by the multi-specialty Al 650 for various purposes, but also to other data 660F which can be used in conjunction with input data.
(g) Encoder 660G can mean a software component which is used to generate embeddings 660L, vectors 660L, and/or other identifiers 660L which are used to capture and/or map features and/or relationships in data. Encoder(s) 660G can be for a particular for a single input, flexible for multiple input types, modal or multi-modal.
(h) Decoder 660H can mean a software component which is used to decode results 660H from embeddings, vectors, tokens, and/or other identifiers. Decoder(s) 660G can be modal or multi-modal.
(i) Model(s) 660I can mean various architecture(s) which involve components such as some or all of the following: layers, sublayers, neurons, connections, weights, adjustment of weights (for example through gradient descent or ascent), attention mechanisms, transformers, normalization, feed-forward networks, tokenization, operations, embeddings, transformations, softmax, dropout, gating, activations, embedding positioning, projections, hyper parameters, and other component(s). In the context of multi-modal 650 models 660I, in layman terms, the multi-modal 650 models 660I can predict the response to a user query and provide it to the user in a usable format. The models(s) 606I can vary greatly, said variations, can relate to, for example, none, one, some or all of the following, model architectures, neural network, network type, number of layers, type of layers, number of parameters, size of dataset it is trained on, input layers, hidden layers, connected layers, output layers, dense layers, convolutions, rectification (ReLU), full connection layers, pooling layers, dropout layers, bottleneck layers, batch normalization layers, recurrent layers, LSTM layers, attention layers, skip layers, functions, complexity, number of nodes, type of modalities, training duration and resources, dimensionality, mechanisms, required memory and/or computing, latency, throughput, scalability, operations, parallelism, optimization, regularization, pruning, quantification, weights and/or other variations).
(j) Fine Tuning 660J can mean taking a pre-trained model 660I, whereas, the model's weights are already set, and continuing training the model on more training data 660E - for example, a dataset that is proprietary, confidential, specialized, accurate, unique, and/or other dataset. The fine-tuning 660J can allow the model 660I to complete its training faster than if trained from scratch, and optimize its responses for the provided dataset.
(k) Transformer 660K can refer to a combination of encoder-decoder architecture, whereas supported input data can be converted to embeddings 660K (through encoder 660G) and back onto supported output data (through decoder 660H).
(l) Embeddings 660L are a simplified form of raw data, whereas the simplification can be done through reduction of a dimensionality of the source data and storing it in a vector representation. Embeddings 660L capture key features and information deemed important and/or relevant based on the algorithm used and provided dataset. Embeddings 660L also can be similar based on context (for example, same animal in different poses, similar animals in same poses, synonyms of words, the same word said by different people). Embeddings can be aligned 660F across multiple modals and/or data types.
(m)Tokenization 660M is a process of converting data 601-606 onto units called tokens 660M. These units 660M can be processed by machine learning models 660I. Tokens 660M are considered units which the Al 650 can process, for example, words, parts of images, video clips, and so on. Tokenization 660M of embeddings 660L can be used in prediction. For example, a sentence 605A can be broken onto words, encoded 605B, and whereas the next word can be predicted 640. An image 601 can be broken 601A into patches, and encoded 601B, whereas the missing patches can be predicted 640. Within multi-modal 650 technology, the data 601-606 inputted into the multi-modal model 650 in a tokenized format, which can then generate the appropriate embeddings 601C-607C, which are then used to predict the response, and decode it 660H in one or more output formats 640.
(n) Prompt 6600 can be a process in which a user interacts with the interactive Al 650 in a human friendly way, for example, by making a request. The request can include different input data 601-606 and provided via chat interface, voice commands, file uploads, and/or application interface, and/or combination thereof. The prompt can result in a response from the Ai 650.
(o) Memory 660N can mean feeding to the multi-format Al 650 previous request(s) 6600 which are grouped (for example, as part of one or more conversations, or interests, or topics). The additional information (or portion thereof) available in memory can be fed back together with a new prompt 6600 that can help the multi-modal Al 650 provide results 640 which are more refined and/or useful.
(p) Knowledge base 660P can be additional information which is relevant to the subject matter of the request. The knowledge base 660P can be publicly, privately available and/or a combination thereof. Similar to memory, the information in the knowledge base 660P (or a portion thereof) can be fed back together to the model 650 with a request 6600 that can help the multi-modal Al 650 provide results 640 which are more relevant and/or useful.
(q) Computing 660Q can refer to various hardware elements needed for the multi-modal artificial intelligence 650 to perform its functions. It can be that the multi-modal Al 650 requires more powerful computing to train in comparison to the computing requirements to perform inference(s) and/or prediction(s). Multi-modal Al 650 can require GPUs, TPUs, CPUs, Memory (RAM and/or VRAM), fast storage (SSD, NVMe or equivalent or better), large storage capacity, and networking. The multi-modal Al 650 can be hosted as part of the system 200 disclosed in Figure 2, or as a remotely hosted system provided by others 240.
(r) Generative capabilities 660R means that multi-modal Al 650 can generate 660R content of its own. The generated content can, in some embodiments, be based in part or in full on content it has been exposed to, for example, through training 660E, prompts 660N, memory 6600, knowledge base 660P, and/or combination thereof. While the Al 650 relies on training data 660E, the Al 650 can generate new data 660R, such as new image(s) 641, new video(s) 642, new sounds 643, new speech 644, new text 645, and other new data 646. The generative 660R capabilities of the Al can 660R can therefore be used, in conjunction with various systems and/or components.
(s) Other components ..., 660Z - It is recognized that research related to multi-modal 650 AI, generative Al 650, and/or artificial general intelligence 650, is an evolving field, and some of the described component(s) can be merged and/or broken down to different component(s). It is also recognized that component(s) can be added and/or removed for different implementations of the Al 650. It is also recognized that similar functionalities can be achieved in different ways, whereas multi-modal data 601-606 is inputted, and multi-modal data 640, 641, 642, 643, 644, 645, 646 is outputted. The invention is intended to also use future versions of general Al 650 with substantially similar functions as described in the various embodiments of this invention.

Referring to Figure 7, the diagram depicts an embodiment 700 of the system(s) 100,200,300,500,600, whereas a user or a program is able to request (via a user interface 295A,B,C) frame localized processing 710 (e.g. using the processing instructions 320) of data 120', which can include one, some or all of the following: image(s) 120A', video(s) 120B', sensor(s) data 120C' (which can include location information 120'), database(s) 120F', audio 120G', files 120H', and/or other data 120I'. The processing 710 can be initiated, and/or take place, on the server(s) 210, on device(s) 105, and/or Al server(s) 240, or other server(s) and/or a combination thereof. The request / query 750 could include frame localized retrieval instructions 295D, as given by example below.

The frame localized module 710 can have one or more software components 720 which can interact with the multi-modal Al system 650 in one more ways. For example, by serving the system 650 data 120'; by communicating 119 with other system component(s); by pre-processing data 120' and/or queries for the Al system 650; by post-processing results produced by the multi-modal Al system 650; by breaking the data 120 to page(s) and/or chunk(s) for processing; by fetching data 120' from various sources; by ensuring the request(s) meet ethical, social, functional and/or appropriate and/or in other ways, and/or in a combination thereof.

Once a request has been framed, localized (e.g. via the frame localized retrieval instructions 295D) and/or processed by the flexible Al system 650 component, e.g. using the processing instructions 320, potential results 730 can be retrieved for verification 740. For example, a user can ask (i.e. request including the frame localized retrieval instructions 295D) for visual data 120A', 120B' (for example, retrieval) of a certain dataset 120 which contain(s) a desired object(s) of interest (also referred to as framing of the request), within a certain geographic area (also referred to as localization of the request). The software 720, will compile a list of result(s) 731 for the request. The retrieved results 730 can simply be which portions(s) of the dataset 731 match the request. The retrieved results 730 can also be new data that is generated by the artificial intelligence system 650, for example, embedding's, tokens and/or similar machine standardized format which is decoded for human or application compatible format. For example, the original image(s) 120A' can be modified by the processing instructions 320 (i.e. operating on the frame localized retrieval instructions 295D) to have the object of interest in the image(s) 120' annotated for the user; the original image(s) 120A' together with new metadata which describe the pixel position in an image 120'; extracted frame(s) 120A' and/or clips 120B' from video(s) 120B', and/or other data which is generated by the Al system 650 as associated with the image(s) 120' processed. The images 120' could also be retrieved along with corresponding data 120', for example, date and/or time they were captured 120D', GNSS location 120C', associated geospatial asset id 120F', local system ID 120F', foreign system ID 120F', descriptors from previous Al processing 1201', whether multi-modal or other types, as specified initially via the frame localized retrieval instructions 295D.

The result(s) 730 can then be made available for an optional verification 740, whereas the verification 740 can be non-existent, manual, semi-automated, and/or fully automated. Non existent means that the all applicable result(s) 730 are made available to a user. Manual means that a person, accessing the system 700 through an interface 295A,295B,295C is able to see a list with the result(s) 730, or with a subset of the result(s) 730. Semi-automated can mean that some of the verification 740 process is pre-programmed, for example, through history, saved queries, suggestions, and/or shortcuts. It can also mean that the result 730 data can be filtered 740, processed, 740, cross-checked by other Al (whether multi-modal or other), automatically approved, reject and/or flagged for human review based on set criteria (for example, associated fields 120', new data 732, and/or combination thereof). Fully automated means that the software can use programming and/or other artificial intelligence models, whether multi-modal 650 or not, to verify 740 the result(s) 730.

The system 700 users can, before processing the dataset 120', process a smaller portion, subset, sample, certain percentage, certain number of samples, evaluation set, or other slice of the data 120' (for example, by framing the input set the frame localized retrieval instructions 295D to the FLAIR 710 system 700) or limiting to a certain number of results 730 (for example, via the frame localized retrieval instructions 295D to frame the output set to the flair module 710). For example, if there are millions of records 120' to process, a user may want to first process a single, few and/or some subset(s) of sample(s), and see what the result(s) look like, and whether they satisfy the business needs of the FLAIR 710 application. The user, after verifying 740 the initial result(s) 730 and making adjustments to the queries 750 (e.g. via modifying the frame localized retrieval instructions 295D) through the interface 295A,295B,295C, can then expand to X results, or Y samples, or Z% of the data.

The user can also adjust / frame the queries 750 via the frame localized retrieval instructions 295D, for example, by expanding 750-1, refining 750-1, changing 750-1, combining 750-3, and/or excluding 750-3 result(s) 750. The user can also frame the request / query 750 (e.g. via the frame localized retrieval instructions 295D) to constrain the data 120' prior to processing based on other criteria that can be already associated with the data 120'. For example, the available data 120' can already be localized (e.g. via the frame localized retrieval instructions 295D) to an ID, asset, geospatial asset, coordinates, address, locality, city, postal code, data source, platform, time, date, direction, orientation, sensor data, metadata, camera, coordinate, incident, category, tag, database column, field, and/or other data which can be used to include 2 and/or exclude 3 data 120'. A user can refine / frame the search criteria 750 (e.g. via the frame localized retrieval instructions 295D) at the inception of the search or at one or more iterations 730, 740, 750, 760, 770, 780. The framed localization retrieval engine 710 can return analysis results 760 which are based on refined criteria 750, i.e. the framed request / query 750 (e.g. including the frame localized retrieval instructions 295D), including portions of the dataset segmented by the framing, localization (for example, limiting the data to associated data which is localized to certain specified criteria for the processing instructions 320) and/or retrieval of a sub-set of the multi-modal system 650 output.

For greater clarity, the frame localized retrieval system 710 can also generate results 730, 740, 750, 760, 770, 780 without the use of multi-modal Al system 650. When new data is generated, through general Al system 650, specialized Al 720, algorithms 720, and/or other system functions, the results 761 can include none, some or all of the original data 120' as matched 761 data. The results 760 can also include new data (for example, text, metadata, inference results, and/or other data generated by the multi-modal Al system 650 and/or the software 720 as new data 762. Prior to returning the final results 780, the engine 710 can run the data through a quality check 770, for example, for ensuring the results meet certain quality in terms of ethical, social, functional, appropriate, acceptable considerations, correct information, and/or in other ways, and/or in a combination thereof. The quality check can be manual by a system admin, manual by an end-user, semi-automated (whereas some results 760 get flagged for review by software 770, algorithms 770, and/or Al 770), fully automated (whereas none, some, or all of the result data 760 is approved, flagged for review, and/or rejected automatically). The user can therefore retrieve results 780 through the interface 295A, 295B, 295C, for example, as a result of the frame localized retrieval instructions 295D included in the queries 750.

As discussed herein, advantageously, the user can frame localized retrieval instructions 295D (as part of the query 750) through the user interface(s) 295, e.g. interfaces 295A, 295B, 295C. The requests 750 can be made to the retrieval AI 710, to an application interface (API) 720, to an end point 720, programmable interface 720 and/or other such software 720. The request(s) 750 can be made by the clients 295A,B,C, by the servers 210, by other systems 150. The requests 750 can also refer to other data sources 201. The requests 750 can be manual, pre-programmed, configurable, triggered based on an activation condition, based on a schedule, based on an event, and/or based on other specified or non-specified criteria.

For example, using the interface 295A, a user can access geospatial data 295A-1 from a geospatial system 150, 210, whereas records of asset(s), incident(s), issue(s), collected(d) image(s), and/or collected video(s) (collectively, "Geospatial Records") can be displayed on a map 295A-1. The user can select one, some, or all of the geospatial records using various selection tools, buttons, filters, and/or other components for processing by the interactive analysis platform 710.

For example, using the interface 295A, a user can access data 295A-3 from a database system 210, 150, whereas records of asset(s), incident(s), issue(s), collected(d) image(s), and/or collected video(s) (collectively, "Database Records") can be viewed in a tabular format 295A-3. The user can select one, some, or all of the Database Records using various selection tools, buttons, filters, and/or other components for retrieval by the frame localized Al 710.

For example, using the interface 295A, a user can access data 295A-2 from an asset management system, whereas records of asset(s), incident(s), issue(s), work order(s), collected(d) image(s), and/or collected video(s) (collectively, "Asset Records") can be viewed in a nested list format 295A-2. The user can select one, some, or all of the Asset Records using various selection tools, buttons, filters, and/or other components for intelligent retrieval 710.

For example, using the interface 295A, a user can access incident 295A-4 data from an issue management system, whereas records of asset(s), incident(s), issue(s), ticket(s), service request(s), work order(s), and/or collected(d) image(s), and/or collected video(s) (collectively, "Issue Records") can be viewed in a detailed view format for each record 295A-4. The user can select one, some, or all of the detailed Issue Records using various selection tools, buttons, filters, and/or other components for Al localized prioritized review 710.

For example, using the interface 295A, a user can select available data 120' from a device 105, server 210, or another source 201, via a query 295A-5, prompt 295A-5 and/or a chat conversation 295A-5 with the multi-modal Al system 650, whether directly or through third party software 720 and/or server(s) 150, whereas applicable records of asset(s), incident(s), issue(s), collected(d) image(s), and/or collected video(s) (collectively, "Prompted Records") are retrieved and presented by the interactive Al search module 710.

For example, a user can, via an interface 295B, specify paths 201, folders 201, sources 201, datasets 201, databases 201, files 201, and/or a combination thereof 295B-1 for use with the cross-functional 710 module. The user can also set 295B-3 aspects of the analysis and/or retrieval of data 120' on the multi-purpose Al 710 using code 295B-3, pseudo-code 295B-3, profile(s) 295B-3, configuration(s) 295B-3, criteria(s) 295B-3, setting(s) 295B-3, script(s) 295B-3, and/or other such programmable methods 295B-3.

For example, a user can, via an interface 295B, define process(s) 295B-2, step(s) 295B-2, workflow(s) 295B-2, action(s) 295B-2, condition(s) 295B-2, trigger(s) 295B-2, option(s) 295B-2, flow(s) 295B-2, activation(s) 295B-2, and/or other such methods 295B-2 which can be used by the integrated software 720 and Al 650 retrieval module 710.

A user can, via an interface 295C, interact with result(s) 730, 740, 750, 760, 770, 780 data in a variety of ways. For example, the user can view a list 295C-1 of the results 730, 740, 750, 760, 770, 780. For example, the user can view visually on a map 295C-7 the localized result(s) 730, 740, 750, 760, 770, 780. For example, the user can view on the interface 295C-2 an image of the framed 761 data. For example, the user can view 295C-4 a modified image 762, including a newly generated annotation (box in this example) embedded onto the image 295C-4 and/or overlaid on top of it. For example, the user can browse the resultant data 762, which can include image(s) 295C-3 and/or video(s) 295C-5 on an interface. For example, the user can narrow or expand the relevant data based on user interface controls 295C-6.

The interface(s) 295A,295B,295C provided are just examples of more generic interfaces 295, and it is recognized that they can have variety in components, functions, and interaction with the user. Which can be the same, similar, different or vary in different ways, but perform substantially similar functions and/or fulfill similar purposes. The client(s) can interact directly with the server(s) 210, 150 and/or device(s) 105 and/or platform(s) 110 which may host the structured segmentation and generation module 710, or can interact indirectly through intermediate servers 210.

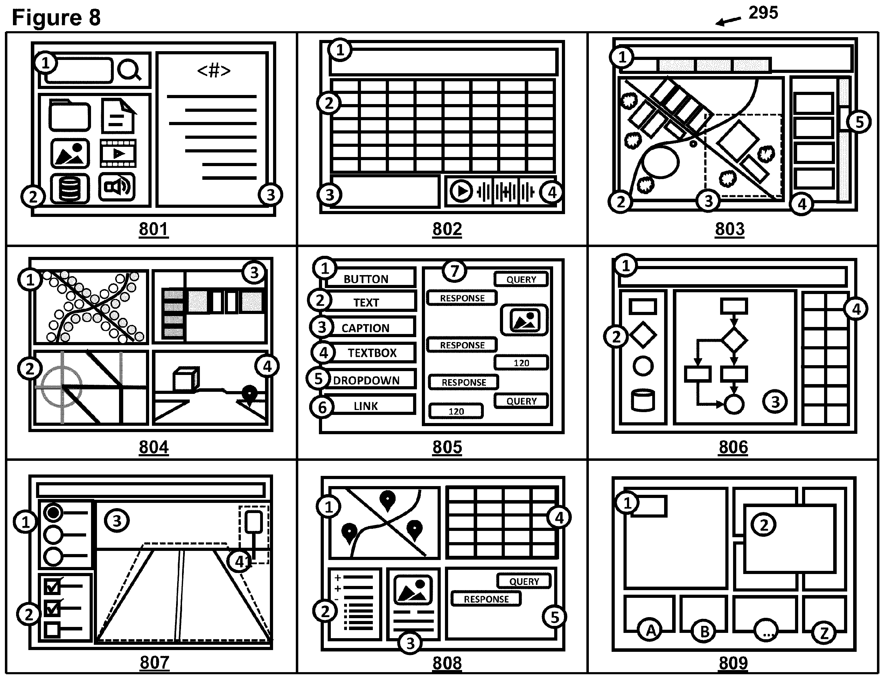

Referring to Figure 8, Figure 1 and Figure 7 the system 100, 700 can have a variety of one or more user interface components 801-809 included in the user interface(s) 295, which can assist in the interaction between the user, the source data 120', the server(s) data, whether directly on the system server(s) 210, on other server(s) 150, or a combination thereof.

The embodiments of the user interface(s) components 801-809 can include one, some or more of the following components: 3d map(s) 804-4, audio player(s) 802-4, bottom panel 802-3, top panel 802-1, side panel 802-4, button(s) 805-1, caption(s) 805-3, chart(s) (not shown), chat history(s) 805-7, multi-modal chat 805-7, chat interface(s) 808-5, check box(es) 807-2, code compiler(s) 801-3, combo box(es) 807-1, dashboard(s) 809-A..Z, database(s) view(s) 809A..Z, detailed views 808-3, drag and drop module(s) 809A..Z, dropdown(s) 805-5, expanded list(s) 808-2, expanded tree(s) 808-2, file(s) 801-2, filter(s) 809A..Z, flowchart(s) (806-3), folder(s) (801-2), frame(s) 802-3, graph(s) 809A..Z, grid view(s) 808-4, image overlay(s) 807-4, 295c-4, image(s) 807-3, 295C-2, 801-2, 804-1, 803, image(s) galleries 295C3, indicator(s) 809A..Z, isometric map(s) 295A1, legend(s), link(s) 805-6, list view(s) 802-2, map lines(s) 804-2, map overlay(s) 804-1, 804-2, 804-3, map point(s) 804-1, map polygon(s) 804-3, map selector(s) 803-3, map shape(s) 804-3, menu(s) 809-A..Z, modal(s) 809-2, object panel(s) 803-4, oblique map(s) 295A1, orthogonal map(s) 803-2, overlay button(s) 809-1, panel(s) 802- 806-1, pie(s) 809A..Z, pin(s) 808-1, property grid(s) 806-4, raster map(s) 803, script(s) 295B-3, notebook(s) 295B-3, scroll bar(s) 803-5, shape(s) 806-2, tab(s) 803-1, text(s) 805-2, textbox(es) 805-4, thumbnail(s) 295A-4, tooltip(s) 809A..Z, tree(s) 808-2, vector map(s) 804-2, video(s) 801-2, view(s) 801-809, widget(s) 809A..Z, search bar(s) 801-1, and other controls (not shown), accordion(s), alert(s), breadcrumb(s), calendar picker(s), card(s), carousel(s), color picker(s), database explorer(s), date and time picker(s), dialog(s), file download control(s), file upload control(s), form(s), icon(s), image viewer(s),list box(es), loader(s), menu(s), navigation bar(s), notification(s), page(s), profile(s), progress bar(s), rating(s), selector(s), slider(s), spinner(s), stepper(s), tabbed panel(s), timeline(s), toggle switch(es), tool tip(s), toolbar(s), video player(s), wizard(s), selector(s), help and support component(s), and/or other UI component(s) and/or combination thereof. The component(s) 801-809 can be combined (for example, searchable drop down, clickable legend, and more) or broken down to other component(s).

The user interface(s) components 801-809 for user(s) can vary based on implementation(s), profile(s), configuration(s), client(s), role(s), views, intend use(s), and/or other reason(s), and/or combination thereof. It is recognized that the depicted and/or described user interface components can be adapted and/or configured in ways different than those depicted, to achieve certain functions and/or business objectives. While the user interface component(s) 801-809 can be used in a variety of ways, examples will be provided in relation to interacting with the intelligent data segmentation and inference system 710 and related data from other systems (such as surveys, assets, incidents, alerts, inspections, condition ratings, properties, and other data).

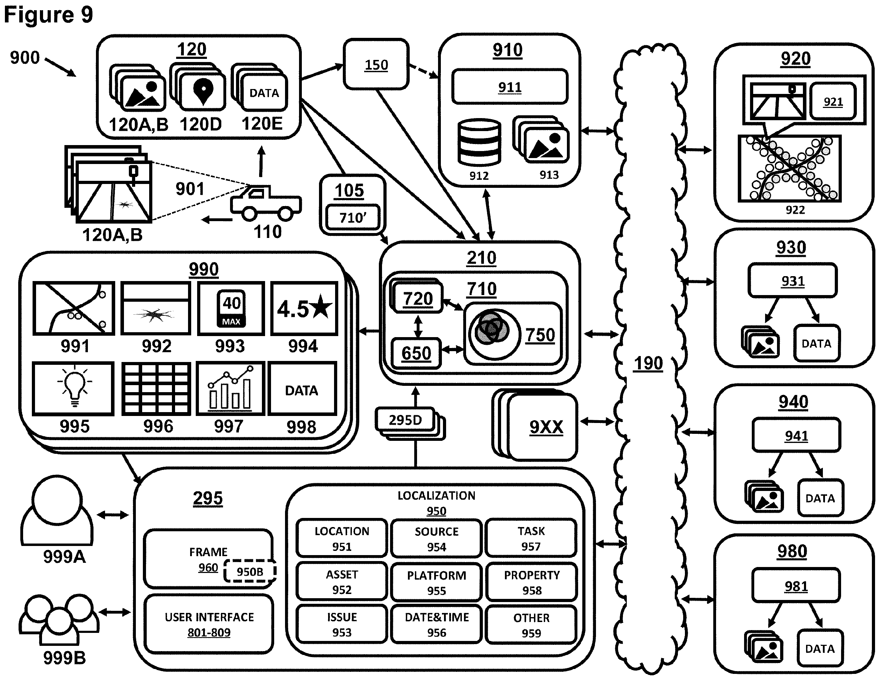

Referring to Figure 9, we depict and an embodiment 900 of the system 100, 200, 300, 500, 600, 700 demonstrating possible flow of data, from initial data 120 collection by platform 110 to server 210 processing 710, and interaction by one 999A or more 999B system users using a user interface 295. Importantly, it is recognized that the following operation of the system 900, as described below, can also equally be performed with synonymous features and operations as provided above with respect to the systems 100,200,300,500,600,700.

A data collection platform 110 equipped with a camera 101 is capturing image(s) 120A and/or video(s) B visible in the field of view 901 of the camera. The platform 110, in this example being a vehicle 110, can also collect location information 120D from a sensor 120D (for example, GNSS or GPS), along with other data 120E which can be related to the vehicle 110, the camera, the sensor(s) 120D, and/or a combination thereof. The originating data can then be uploaded to a specialized system 150 (for example, dashcam system 150, automated vehicle location system 150, fleet management system 150, CCTV system 150, survey system 150, or other system 150), directly to the FLAIR system servers 210, and/or a combination thereof. The platform 110 data 120 can be processed 911 on an intelligent device 105, the specialized system 150, and/or the FLAIR system 210, that can organize the acquired images 913 and corresponding information 120. It is recognized that although network communications 190 are not specifically shown for all system 900 items, the data between the various system's 900 components can flow using one more communication network(s) 190. The data 120 can be organized 911 on the specialized servers 150, system servers 210, or both, for example, by storing the image 913 and/or video 913 data in a structured 912 manner, for example, with index files 912, databases 912, data storage solutions 910 (whether software, hardware, and/or combination thereof), and/or other data systems 910.

The data 120 can be organized on the system servers 210 and/or externally 920 using geospatial system(s) 920 and/or component(s) 920. The geospatial data 120,912, 921 can be represented, in different coordinates systems, projection(s), and/or datum (for example, WGS 84 (World Geodetic System 1984), NAD 83 (North American Datum 1983), ED 50 (European Datum 1950), UTM (Universal Transverse Mercator), State Plane Coordinate System (SPCS), British National Grid (OSGB 36), Lambert Conformal Conic, Mercator, Albers Equal-Area Conic, local coordinate system(s), and/or other coordinate system(s). The data geospatial data 120, 912, 921 can also include other GIS properties (such as depth, height, and/or altitude, for example). The geospatial data can include shapes 912, which can include, for example, circle(s),ellipse(s), line(s), multi-line(s), multi-line string(s), multi-point(s), multi-polygon(s), point(s), offset(s), midpoint(s), centerpoint(s), polygon(s), polyline(s), rectangle(s), triangle(s), and/or other shapes, and/or combination thereof. The geospatial 920 module can include geospatial database(s) 910, 920, such as PostGIS, MySQL with Spatial Extensions, Oracle Spatial and Graph, Microsoft SQL with Spatial Data, MongoDB with Geospatial Indexes, SQLite with SpatialLite, Neo4j with Spatial Extensions, Cassandra with GeoMesa, Amazon Aurora with Spatial Extensions, Google Big Query GIS, IBM Db2 with spatial extender, ArangoDB, RedisGeo, Couchbase with Geospatial Indexing, Elasticsearch with GeoSearch, and/or other geospatial databases and/or function(s), and/or combination thereof.

The data 120, 912, 913 can be correlated 930 on the system servers 210 and/or externally 930 to particular asset(s) 931 related to the field in which the data was collected (for example, if vehicle platform 110 collected the data 912, 913, 120, then the asset(s) can be roads 931, traffic signals 931, signs 931, and/or assets viewable from platform 110.) The data 120 can also be correlated 930 on the system servers 210 and/or externally 930 to particular asset(s) 931 under management of the organization utilizing the system 110.

The data 120 can be correlated 940 on the system servers 210 and/or externally 940 to particular problem(s) 941 identified in the location 120D in which the data 120 was collected (for example, if vehicle platform 110 collected the data 912, 913, 120, then deficiencies (e.g. objects for detection in the image frames as specified by the frame localized retrieval instructions 295D) can be pothole(s), crack(s), noxious vegetation(s), lived-in vehicle(s), fallen sign(s), and/or incident(s), issue(s), problem(s), hazard(s), and/or concern(s) present in the available image(s) 913). The issue(s) 940 can also be correlated on the system servers 210 and/or externally to particular asset(s) 931 under management of the organization utilizing the system 110, and/or to particular ticket(s), infraction(s), code violation(s), service request(s), work order(s), and/or task(s), and/or a combination thereof. It is recognized herein that assets is another way to refer to objects and/or deficiencies. In any event, it is the assets/objects/deficiencies that are present in the image data 120 and thus are identified/detected for the user via the user interfaces 295A,B,C, as facilitated by including the frame localized retrieval instructions 295D in the queries 750 (see Figure 7). In particular, it is the image processing instructions (e.g. Al software) that can be used to help identify the assets/objects/deficiencies present in the image data 120, recognizing that the image processing instructions (e.g. Al software) are assisted by the desired assets/objects/deficiencies (i.e. what the user wants to see/ understand from the image data 120) defined in the frame localized retrieval instructions 295D.

The data 120 can be correlated 981,911 on the system servers 210 and/or externally 981,9101to one or more database(s) 981, table(s) 981, object(s) 981, column(s) 981, row(s) 981, entry(ies) 981, field(s) 981, property(ies) 981, and/or other data properties, and/or combination thereof. The correlation 980 can take place in various ways, for example, using index(es) 980, join(s) 980, algorithm(s) 980, inference(s) 980, query(ies) 980, match(es) 980, search(es) 980 and/or other software operations 980 and/or database operation(s) 980,911.

It is recognized that the data 120, 912, 913, 921, 931, 941, 981 correlation 911, 921, 931, 941, 981 can take place on one or more server(s), whether internal 210 and/or external 150, 105. It is also recognized that more correlations 9XX can take place in relation to other system(s), object(s), and/or entity(ies), and/or combination thereof. It is recognized that initial and/or subsequent processing 911 can also include software 911, artificial intelligence 911, algorithm(s) 911 and/or other software operations 911 which can occur along as the data 120,912,913 flows / is processed / progresses through the system 900.

A user 998 can use a client interface 295 to initiate frame 960 localized 950 request retrieval instructions 295D to the FLAIR 710 server(s) 210. The user 998 can refine his search criteria 950 and/or multi-modal retrieval 710 by including and/or excluding data 912 (e.g. as defined in the frame localized retrieval instructions 295D) which reflects potential content in the images 913 that the user wants to retrieve / understand. One advantage of using the frame localized retrieval instructions 295D is that only images from the data 120 that are pertinent ot the user are retrieved by the user via the user interface 295A,B,C. In this way, the user can review a vast amount of data 120 but only actually retrieve that data 120 that is relevant to the user (i.e. as defined by the frame localized retrieval instructions 295D).

The user 998 can localize 950 (e.g. as defined in the frame localized retrieval instructions 295D) the request by requesting data 120,912,913 subset which is constrained by location 951. Localization 950 can occur, for example, by location 951, by asset 952, by issue 953, by source 954, by platform 955, date & time 956, by property 957, by task 958, and/or by other criteria 959, and/or by a combination thereof.

For example, data 912,913 contained inside and/or outside of a geospatial boundary 951; data more than, less than, and/or equal to certain distance from a geospatial point and/or geospatial shape 951; data near an address 951; data in a positional relation to a geospatial point and/or geospatial shape 951 (for example, ahead, behind, right, left, north, south, east, west of); data on top of 951 a geospatial point and/or a geospatial shape; concentration of data in terms of quantity, value and/or distance 951 ; and/or other location constraints 951 ; and/or a combination thereof.

The user 998 can localize 950 (e.g. as defined in the frame localized retrieval instructions 295D) the request 750 by requesting data 120,912,913 subset which is constrained by asset related information 952. For example, constrained by asset(s) ID(s) 952, name(s) 952, owner(s) 952, code(s) 952, type(s) 952, category(ies) 952, property(ies), field(s) 952, record(s) 952, plan(s) 952, asset(s) rating(s) 952, asset(s) age 952, asset(s) priority(ies), asset(s) installation/commissioning/setup date 952, asset(s) warranty period 952, asset(s) report(s) 952, asset(s) coordinate(s) 952, asset related issue(s) 952, asset inspection date(s) 952, related data source(s) 952, related asset(s) 952, and/or other asset(s) related parameters 952, and/or combination thereof.

The user 998 can limit 950 (e.g. as defined in the frame localized retrieval instructions 295D) the request 750 by requesting data 120,912,913 subset which is constrained by incident related information 953. Example(s) of issue related constraint(s) can be ID(s) 953, detection boxe(s) 953, mask(s) 953, type(s) 953, quantity(ies) 953, date created 953, date modified 953, severity 953, priority 953, groups 953, reporting source(s) 953, nearby incident(s) 953, related asset(s) 953, processing time(s) 953, whether a service ticket and/or work order have been generated 953, status (for example, new, open, cancelled, rejected and/or other), address and/or address range 953, tag(s) 953, associated asset(s) 953, zone(s) 953, repair type(s) 953, resolution type(s), infraction type(s), and/or other criteria 953, and/or combination thereof 953.

The user 998 can hone 950 (e.g. as defined in the frame localized retrieval instructions 295D) the request 750 by requesting data 120,912,913 subset which is constrained by the data source 954. Examples of data source(s) 954 criteria can be ID(s) 954, name(s) 954, type(s) 954, system server(s) 210, 954, other server(s) 150, 954, device(s) 105, 954, platform(s) 110, 954 other module(s) 920,930,940,980, 954, and/or other data sources 954, and/or combination thereof as specified in the description (for example, in Figure 1 and/or Figure 2).

The user 998 can target 950 (e.g. as defined in the frame localized retrieval instructions 295D) the request 750 by requesting data 120,912,913 subset which is constrained by the platform(s) 955. Examples of platform filters 955 can include platform ID(s) 955, name(s) 955, type(s) 955, owner(s) 955, model(s) 955, size(s) 955, weight(s) 955, range(s) 955, endurance(s) 955, altitude(s) 955, use(s) 955, purpose(s) 955, movement(s) 955, movement(s) properties 955, state(s) 955, status(es) 955, mechanism(s) 955, sensor(s) 955, camera(s) 955, method(s) of operation 955, mode(s) of operation 955, medium(s) traversed 955, trip(s) 955, date range(s) 955, time range(s) 955, medium(s) penetrated 955, event(s) 955, and/or other criteria 955, and/or combination thereof.

The user 998 can shape 950 (e.g. as defined in the frame localized retrieval instructions 295D) the request 750 by requesting data 120,912,913, subset which is constrained by the date and/or time 956. For example, the request can be restricted to relative date(s) 956 (for example, last X days), absolute date(s) 956 (for example, a particular date), relative time(s) 956 (for example, last X hours), absolute time(s) 956 (for example, a specific hour/minute/second or other), date range(s) 956 (for example between date X to date Y), time range(s) 956 (for example, between hour X to hour Y), recurring period(s) 956 (for example, daily, weekly, monthly, quarterly, bi-annually, annually, and/or other), holiday(s) (for example, on Christmas), and/or other date and/or time related criteria 956, and/or combination thereof.

The user 998 can refine 950 (e.g. as defined in the frame localized retrieval instructions 295D) the request 750 by requesting data 120,912,913 subset which is limited by related task(s) 957. For example, the request(s) 295D can be refined to Al generated incidents 957, human generated incidents 957, manual annotations 957of collected data 120A,B, citizen complaint(s) 957, object detection(s) 957, image classification(s) 957, instance segmentation(s) 957, image to text operation(s) 957, image comparison(s) 957, de-duplication of data 957, correlation of data 957, logged call(s) 957, uploaded image(s) 957, issue(s) reported via app(s) 957and/or portal(s) 957, identified anomaly(ies) 957, service request(s) 957, initiated by internal and/or external staff, system generated alert(s) 957, hazard(s) 957, work order(s) 957, inspection(s) 957, contract(s) 957, preventative maintenance 957, corrective maintenance 957, repair(s) 957, survey(s) 957, issuing of ticket(s) 957, issuing of infraction(s) 957, issuing of code violation(s) 957, inventories 957, pickup(s) 957, drop off(s) 957, service(s) 957, application of material 957, use of equipment 957, transfer(s) 957, relocation(s) 957, and/or other tasks which require action 957 and/or tracking 957, and/or a combination thereof 957.

The user 998 can select 950 (e.g. as defined in the frame localized retrieval instructions 295D) the request 750 parameters by specifying a criteria which matches specified object properties 958 and retrieves subset of the data 120,912,913. The request can specify particular conditions 958 which are applied with available system(s), entities(s) 9XX, database(s) 910,920,930,940,980, and/or table(s). Example(s) can include database(s) 980, platform(s) 110, asset(s) 940, 920, incident(s), 930, service request(s), work order(s), complaint(s), trip(s), organization(s), user(s), survey(s), snapshot(s), collection(s), device(s), server(s), ticket(s), region(s), system(s), and/or other criteria; and/or combination thereof. Example of matching operations 958 can include, for example, selecting 958, queries 958, joins 958, equal 958, not equal 958, greater than 958, less than 958, greater than or equal 958, less than or equal 958, and 958, or 958, contains 958, does not contain 958, starts with 958, ends with 958, in 958, not in 958, between 958, not between 958, is null 958, is not null 958, matches regex 958, does not match regex 958, top X 958, sort by X ascending 958, sort by X descending 958, top percentile 958, bottom percentile 958, is empty 958, is not empty 958, matches pattern 958, does not match pattern 958, and/or any other command 958, query 958, instruction 958, mathematical operation 958, calculation 958, string operation 958, and/or object/database/table operation(s) 958 that can refine the criteria of results retrieved from one or more database(s) 958, and/or combination thereof.

It is recognized that the user 998 can also limit 950 (e.g. as defined in the frame localized retrieval instructions 295D) the request 750 parameters in other ways 959 (whether manual, semi-automated, and/or automated) using the user interface 801-809 and/or programming capabilities. For example, the request could be limited 959 by quantity 950, by rate 950, by hourly limit 950, by daily limit 950, by weekly limit 950, by monthly limit 950, by subscription plan 950, by trial 950, by available features 950, by quarterly limit 950, by limit of a certain number of occurrences in a specified time period 950, by size of images 950, by number of records localized 950, by number of records framed 950, by the number of records frame localized 950, by the number of records retrievable 950, by input to FLAIR 710 950, by output of FLAIR 710 950, by permissions 950, by modal 950, by modalities 950, by artificial intelligence models 720, 650, by role 950, by software review 950, by human review 950, by data usage 950, by token usage 950, by API call usage 950, by cost 950, and/or by other criteria which can otherwise limit the request(s).

The user 998 can also frame 960 (e.g. as defined in the frame localized retrieval instructions 295D) the request 750 using audio, visual and/or text instructions which are to be used by a powerful artificial intelligence 650 (for example, multi-modal Al 650). The framing 960 of the request can be in single modal form or multi-modal form in relation to text, speech, and/or images. The user can frame the request in a human friendly way through UI format 801-809 (for example, through a chat interface, or a text box to which a user 998 can type, or an audio capture interface 801-809). The framed 960 request can execute on the already localized data, all data 912,913, and/or combination thereof.

The localized criteria 950 together with the user framed prompt 960 can be executed as a request 750 on the server(s) 210. It is recognized that the request can actually be one or more request(s) working together. For example, a city can collect a large geo-referenced image dataset 120, for example, from a vehicle 110, which can be referred to, for example, as a digital twin. A user 998 can narrow 750 the dataset 912 based on an area 951 (such as a neighborhood 951), then narrow 750 the dataset 912 based on data entries 912 contained within a radius distance 951 from asset type 952 (for example, stop signs 952). The dataset, in different embodiments, can include, or refer to, available images 912,913, narrowed images 750,913, collected images120A,B, whether in part or in full 120A,B, 913. The selected subset 715 can be, for example, two hundred images 913 (and/or corresponding data 120D, 120E, 912) located within X meters from the stop signs 952. The user 998 can then type a prompt 960 (for example, "which of the stop signs contained in the area have a clearly visible stop bar? Please return a table with the following columns: asset ID; stop bar presence column (yes or no value), and corresponding image name. Do this for each stop sign I provided to you."), the series of request(s) can be provided to the frame localized Al 710, which includes data subsets 750 and multi-modal Al 650, being fed a narrowed dataset of image(s) 913 and asset(s) 952 records, can then use the dataset to try and match images with stop bars to stop signs, and return the results 990. The result data 990, could then be used to show the user on a map 991 the locations of the signs, and whether they have a stop bar or not. It is recognized that the process of framing 960 and/or localizing 950 can have various embodiments: For example, a user 998 can first select 950 a dataset, and then frame 960 the query 750 to run on it. In another example, a user 998 can continuously localize 950 a request 750, view the results 990, and once comfortable, frame a multi-modal 960 analysis request, run it 710, then view the results 990 again. In another example, a user can frame 960 a multi-modal request to run across a whole available dataset 912, 913, then filter the results 990 based on specified parameters 951-959. The interactive process 900 involving user entered data 960 and the segmented data 950 can take multiple iterations of localization, framing, and review of results 990. The interactive steps 950, 960, 295D, 710, 990 can also have history of localization requests 950, framed requests 960, and/or combination thereof. It is recognized that the frame localized retrieval software 710 applying different software modules 720, refined search results and multi-modal Al system 650, and/or modal artificial intelligence 720, can support various functions to segment, filter, present, verify, qualify, and/or review the results as previously described in Figure 7.

Within the context of a digital twin, the FLAIR system 900 can analyze digital twin data, whether available on the platform 110, device 105, servers 210,105, database 910, and/or combination thereof, in part or in full, correlating 911 image data 913, locations 912, 920, assets 912,930, and/or combination thereof. Digital twin can be a series of geo-referenced 911,912, 921, image(s) 913 obtained from a platform 110 and/or device 105 camera and accessible by the flair software 710. The digital twin representation can be pins on maps (with corresponding data made available when clicked on using the interface 801-809). The digital twin representation can have navigation controls 801-809 allowing you to proceed from one point (whether image 913 and/or data entry 912) to the next, for example, a an image view 913 captured on a ground level, which allows the user 999A to travel, navigate, view, and/or follow the captured data (for example, travelling image by image, or by playing a video, along a roadway, path, bridge, sidewalk; panning around object and/or asset by switching to images captured at different angles; panning from one image to the next, for example, through map stitching, map tiles, and/or map images; and/or other digital twin controls which allow to travel, navigate, pan, zoom, tilt using one or more image(s) 120A,913 and/or video(s) 120B,913, their location data 120D,912 and/or other orientation information 120E). The digital twin system 900 can have the captured data 912,913 over one or more surveys which are imported and/or uploaded to the system 900,140,210, 910. The digital government technology 900 can also have one or more version(s) of the digital data 912,913 (for example, a picture of a sign and/or an intersection which is updated manually, semi-automatically, and/or automatically every X days, when possible, and/or combination thereof).

It is recognized that in some embodiment(s), the localization options 950 can be provided to the multi-modal Al system 650 (for example, as knowledge base) together with the prompt 960, and the framed 960 request can also include localization 950B data for the multi-modal Al system 650 to independently apply at least some filtering 750 to the dataset 912, 913. For example, knowledge base can specify the databases, tables, and/or record location(s) of all available asset(s) 952 (including signs used as example). A user 998 can simply prompt 960 the FLAIR system 710 localization requests 950B. A user 998 can prompt a localization request 960, 950B to get from digital twin database 912,913 all images in neighborhood X, then prompt a localization request 960, 950B to get all digital twin points within Y meters of stop signs contained in the neighborhood, then prompt a third prompt to display the results as pins representing stop signs on a map, with the image as a property field. These dynamic views 720 can refresh the retrieved results 990 presented 801-809 to the user 999A through the interface 295.

It is recognized that the results 990, iterations, and/or history thereof (which can be stored on the server 210 or not stored), can be provided to the user 999A in various formats. The results 990 can be provided as object(s) with geospatial records 991 that can viewed on the map. The result(s) 990 can include image(s) of issue(s) 992 identified, with or without annotations (such as bounding boxes). The result(s) 990 can include asset(s) 993 which meet the specified criteria 950,960. The result(s) 990 can include ratings 994 which are calculated 720 and/or generated by the frame localized artificial intelligence system 710. The result(s) 990 can include insights 995 independently identified by the general purpose artificial intelligence system 650. The result(s) 990 could be new files 996, table(s) 996, list(s) 996, and/or entries which can be correlated with internal 912 or external 150 systems. The result(s) 997 can include software generated 720 and/or generative Al 650 generated charts 997, graph(s) 997, report(s) 997, and/or other data which summarizes the result(s) 990 of the request(s) 295D. It is recognized that the result(s) 998 can also include other data 998, (for example, multi-modal output 998, audio 998, text 998, speech 998, generated image(s) 998, maps 998, embeddings 998, encoding 998, scripts 998, and/or other data, and/or combination thereof). It is recognized that the result(s) 990 can include one or more types 991, 992, 993, 994, 995, 996, 997, 998 and can be served in a combined, iterative, and/or separate format. The results 990 can be provided by the software 710 in series and/or in parallel. The request(s) made by the client interface 295 can be made in series and/or in parallel.

It is recognized the system 900 can support one 999A or more user(s) 999Bs, with one or more role(s), working in one or more organization(s) and/or department(s). It is recognized that the capabilities available to the different user(s) 999B can vary based on various factors, such as, for example, permission(s), subscription plan(s), role(s), security policy(ies), platform(s) used 110, data available 912,913, integration(s) 150,920,930,940,980 of modules and/or systems, and/or other criteria, and/or combination thereof.

It is recognized that after review of the result(s) 990 by a human 999A, 999B, and/or by software (not shown), and/or a combination thereof, the system 900 can update the record(s) 912,913 of the available data, whether internally 210, and/or externally 150. It is recognized that in some embodiment the device(s) 105 can also be equipped with variations of the FLAIR 710' software, which can be used to intelligently retrieve data 120A,B,120D,120E from the device 105 and/or platform 110.

While the area of application of this system is broad, this technology could be used by governments and/or authorities (federal, state, province, regional, local, and/or other, for a variety of purposes). One particular sample use case is the utilization of a digital twins data, which can include geo-referenced image(s) 120A and location information 120D.

As such, given the above different example operational embodiments of the system 100, 200, 300, 500, 600, 700. 900, it is recognized that the operation can provide a method for geospatial multi-modal intelligent retrieval and/or generation of data from a digital government dataset 120 containing images using artificial intelligence instructions (e.g. processing instructions 321). The method can include the general steps of: making one or more queries 750 to server 210 using a client interface 295; receiving the one or more queries 750 by the server210, such that the one or more queries 750 frames the dataset, localizes the dataset, generates data and/or retrieves data from the dataset (e.g. as defined in the frame localized retrieval instructions 295D); processing the one or more queries 750 using the artificial intelligence instructions to generate result data; presenting the result data to the user through the user interface 295; and receiving interaction instructions from the user for further manipulation of the result data, the interaction instructions received from the user interface 295.

The below details different embodiments of the requests the user 999A can submit (e.g. queries 750), as defined by the frame localized retrieval instructions 295D.

The user 999A can request the system 710 to inventory asset(s) 930 visible in the image(s) 913. For example, in the context of intelligent processing of digital twin data 913 of a government, example(s) of asset(s) 930 visible in image(s) 913 can be: access port(s), adhesive(s), advertising display(s), aggregate surface(s), alarm(s), amenitie(s), anchor(s), angle(s), annual(s), antenna(s), arrow(s) (pavement, signage, etc), ashtray(s), asphalt pavement, asset fixture(s), AV system(s), backflow prevent(s), backup power equipment, bamboo(s), band(s), banner(s), barrel(s), barricade(s), barrier(s), bar(s), basin(s), battery(ies), bench(es), bicycle lane(s), bicycle rack(s), bin(s), blade card(s), bollard(s), bolt(s), boxe(s), brace(s), bramble(s), bridge(s), bridge deck(s), bridge joist(s), building(s), bulb(s), bump(s), bush(es), cable(s), cacti, cager(s), cameras 110, canal(s), canopie(s), catenary(ies), CCTV 110, center(s), channel(s), charging station(s), chicane(s), circuit breaker(s), clamp(s), clip(s), clock(s), clover(s), column(s), combined sewer asset(s), communications equipment, complexe(s), composite material and/or surface(s), computing equipment, concrete structures and/or surface(s), concrete pad(s), conduit(s), cone(s), control equipment, control panel(s), controller(s), corridor(s), crane(s), crossed lines marking(s), crosswalk(s), culvert(s), curb(s), cushion(s), dam(s), dashed lines marking(s), deck(s), decoration(s), delimiter(s), digital display(s), dirt surface(s), dishe(s), ditche(s), dock(s), donation bin(s), door(s), double lined marking(s), drain(s), dumpster(s), exit(s), electrical distribution, electronic device(s), electronic signage, elevator(s), emergency system(s), equipment, escalator(s), ever green(s), expressway(s), facility(ies), fastener(s), feeder(s), fence post(s), fence(s), fern(s), fire hydrant(s), fire water main(s), flag(s), flower bed(s), foliage(s), footpath(s), foundation(s), frame(s), freeway(s), fuse(s), garbage bin(s), garden(s), gas meter(s), gate(s), gator(s), glass panel(s), grass, grate(s), gravel, greenery, guardrail(s), guiderail(s), guide(s), hand rail(s), hanger(s), harbour(s), hedge(s), herb(s), highway(s), home(s), hook(s), horizontal pavement marking(s), information post, ingress(es), insulator(s), intelligent transportation system cabinet(s), intersection(s), joint(s), junction boxe(s), ladder(s), landscaping, lane marking(s), lawn(s), levee(s), lighting, drawn pavement marking(s), line(s), load bearing pole(s), longitudinal pavement marking(s), lot(s), machinery, manhole(s), map(s), mast(s), mat(s), media storage, median(s), mesh, metal plate(s), metal cover(s), metering, meter(s), metro line(s), monitoring equipment, monorail line(s), mosse(s), motor controller(s), motorway(s), mounting plate(s), moving walkway(s), mulch, shaped pavement marking(s), multi-pattern lane marking(s), multi-color lane marking(s), multi-purpose cabinet(s), multi-purpose pole(s), net(s), network equipment, newsstand(s), nut(s), off-ramp(s), on-ramp(s), overpass(es), pad(s), palm(s), panel(s), parking lane(s), parking meter(s), parking spot(s), park(s), passage(s), patch panel(s), payphone(s), pedestrian warning system(s), perennial(s), phone system(s), pin(s), pipe access point(s), pipe(s), planter(s), plant(s), platform(s) 110, playgrounds (and asset(s) thereof), plaza(s), pondweed(s), post(s), power poles/distribution, premise(s), pressure dial(s), process control, protector(s), public waste bin(s), pulley(s), pump(s), pylon(s), radar(s), rail(s), railway(s), railways crossing(s), ramp(s), ramp(s), receiver(s), reed(s), reservoir(s), retaining wall(s), retention pond(s), right-of-way asset(s), ring(s), road(s), rock(s), roof(s), roundabout(s), rushe(s), sanitary sewer pipe(s), sapling(s), seating, sedge(s), seeding, sensor(s), server(s), service line(s), shelter(s), shield(s), shrubbery, shuttle(s), sidewalk(s), signage, signaling equipment, signaling light(s), signal(s), site(s), skywalk(s), slab(s), slat(s), sleeve(s), slot(s), snap(s), solar panel(s), solid pavement marking(s), spall(s), speaker(s), speed hump(s), spike(s), sprinkler(s), stabilizer(s), stair(s), stake(s), standoff(s), stand(s), statue(s), step(s), stone(s), stop-arm(s), stop(s), storm pipe(s), strap(s), street(s), structure(s), mailboxe(s), tree(s), swale(s), sward(s), switchgear, telecomm equipment, telecommunication pole(s), telephony, tent(s), ticketing system(s), tie(s), toilet facilities (whether portable or not), transit stop(s), topiary, tower(s), track(s), traffic light(s), trail(s), tramline(s), transformer(s), station(s), terminal(s), transmission, transmitter(s), transmitter(s), transversal pavement marking(s), triangle(s), tuber(s), tube(s), tunnel(s), turbine(s), underpass(es), utility(iess), vertical pavement marking(s), vine(s), walkway(s), wall(s), warning(s), washroom, water bag(s), water fountain(s), water main(s), water sensor(s), water tower(s), wireless communication box(es), antenna(s), flower(s), window(s), wire(s), wood, wrap(s), floodwall(s), pavement marking(s), and/or other asset(s) 931, and/or related asset(s) 931, and/or combination thereof.

The user 999A could request the system 710 to correlate 931 various asset(s) visible in the image(s) 913. For example, count all the crosswalks(s) 912 which in image(s) 913 and correlate them to crosswalk asset 930. It is recognized that the possible combinations and/or relationships between the asset(s) 913 are too numerous to list in this description, but that so long as they can be localized 950 and/or framed 960, they would be included in this invention.

The user 999A could request the system 710 to inspect 940 various asset(s) 930 visible in the image(s) 913 for various issues 941. For example, in the context of frame localized Al analysis of digital government data 900, asset analysis 710 could be for: missing asset, misplaced asset, structural problem with asset, physical damage to asset, broken asset, shattered asset, chipped asset, bent asset, cracked asset, deformed asset, punctured asset, disintegrated asset, sheared asset, contaminated asset, cut asset, rutted asset, warped asset, bleeding asset, heaved asset, depressed asset, hazardous asset, mangled asset, twisted asset, shattered asset, smashed asset, shot asset, mis-orientated asset, discontinuous asset, leaning asset, fallen over asset, warped asset, uneven asset, mis-aligned asset, non-aligned asset, rotated asset, tilted asset, flipped asset, sunken asset, raised asset, recessed asset, protruding asset, dropped-off asset, mis-positioned asset, invisible asset, obstructed asset, occluded asset, covered asset, obscured asset, obstructed asset, blocked asset, clogged asset, overused asset, polluted asset, worn-out asset, torn asset, exposed asset, asset failures, failed asset, degraded asset, corroded asset, oxidized assed, decomposed asset, rusted asset, eroded asset, tarnished asset, discolored asset, chipped asset, cracked asset, swollen asset, peeling asset, flaking asset, pitted asset, leaking asset, bubbling asset, fading asset, burnt asset, failing asset, degraded function of asset, mechanical failure of asset, electrical failure of asset, material failure of asset, functional failure of asset, vandalized asset, vandalism, poor visibility of asset, over utilized asset, under utilized asset, overflowing asset, inaccessible asset, obstructed asset, dead asset (for example, if asset is vegetation or animal), sick asset, infected asset, infested asset, polluted asset, and/or other issues related to the asset(s), and/or combination thereof.

The user 999A could request the system 710 to review image(s) 120A and/or video(s) for deficiencies 941, hazards 941, bylaw infractions 941, compliance issues 941, code violations, 941 and/or risks 941 visible in the visual data 913.

In the context of multi-modal Al processing of 900 of the governmental image and video data 913 available, examples can include: accidents, animal droppings in public spaces, blocked fire exits, blocked intersections, blocking fire hydrant, blocking sidewalks or streets, blocking snowplows, bonfires, broken guardrails, broken windows, camping in public areas, carpool lane violations, construction activities on a property, construction zones, cracked pavements, cracked surfaces, dangerous animals, debris, dilapidated structures, distracted driving (e.g., using a mobile phone while driving), double parking, drivers using phones, car driving in a bike lane, encampments, encroachments, erosion, expired parking meter, expired vehicle registration, exposed wires, faded road markings, failure to clear snow from sidewalks, failure to display required permits, failure to leash pets, failure to maintain a pool fence, failure to maintain sanitary conditions, failure to obtain necessary permits, failure to signal, failure to stop for a school bus, failure to wear a seatbelt, failure to yield, failure to yield to pedestrians, falls, fire, fire hazards, flood, flooded streets / sidewalks / paths / and/or platforms, foggy weather, graffiti, graffiti on public property, spills, ice on pathways / platforms and/or roads, Illegal burning of trash, Illegal construction or remodeling, Illegal dumping, illegal parking, Illegal parking in a school zone, Illegal street vending, illegal u turn, Illegal use of public parks, Illegal U-turn, Illegal window tint, improper lane changes, inaccessible areas, inaccessible buildings, inaccessible transit stops, inaccessible sidewalks, inaccessible path, inaccessible crosswalks, inaccessible buildings, inaccessible facilities, infestations, insufficient crosswalks, invasive species, jaywalking, prohibited animals, left-turn violations, limited visibility, limited visibility of asset(s), littering, lived in vehicles, loitering, low bridge clearances, malfunctioning traffic cameras, malfunctioning traffic lights, malfunctioning street lights, malfunctioning lights, missing assets, missing barriers, missing crosswalks, missing street signs, missing warning (orange spray, sign, cone, tape or otherwise), missing persons at post, sleeping person at post, missing safety gear, missing safety clothes, mold, narrow lanes, creeping windrows, neglected lawns, neglected properties, no visible permits, not wearing helmet (where required), not wearing a seatbelt, obstructed signage, overcrowding, overgrown vegetation, overly dark areas, panhandling, parked vehicles blocking driveways, parking in a bus stop, parking in a handicap space without a permit, parking in a loading zone, parking in a no-parking zone, parking in a residential permit zone without a permit, parking on a sidewalk, parking violations, pests, poor night time visibility, poor lighting, poor retro-reflectivity, poor sightlines, potholes, unsafe railway crossings, reckless driving, riding a bicycle on the sidewalk (in areas where prohibited), road closure, road surface cracks, running a red light, running a stop sign, severe weather conditions, sidewalk damage, sparks, skateboarding in prohibited areas, slippery floors, slippery roads, slippery surfaces, smoking in a forbidden areas, smoking in non-smoking areas, snow accumulation, ice accumulation, water accumulation, dirt accumulation, debris accumulation, vegetation accumulation, snow on pathways / platforms / roads, ice on pathways / platforms / roads, water on pathways / platforms / roads, speed bumps, speeding, spills, stalled vehicles, steep inclines, insufficient angle for water to clear, smoke, street lighting issues, traffic congestion, traffic violations, trash accumulation, trespassing, trip hazards, trucks driving in unauthorized streets, unattended packages, unauthorized vehicles going wrong direction, unauthorized vehicles in carpool lanes, unauthorized vehicles on bicycle lanes, underpass flooding, Uneven surfaces, unkempt property, unleashed pets, unmarked construction zones, unmuzzled pets, unsalted surface (sidewalk, transit platform, or other), unsecured loads, unshielded machinery, unusable bike lanes, unusual traffic patterns, utility work, vandalism, vandalized street signs, vehicles blocking intersections, vehicles blocking pedestrian paths, vehicles driving and/or stopping in transit lanes, vehicles driving and/or stopping in car pool lanes, vehicles driving and/or stopping in bicycle lanes, vehicles driving and/or stopping in no vehicle paths, water main breaks, watering during restricted hours, wet floors, wildlife crossings, yield violations, violations, safety concerns, hazards, risks, and/or other visible issues which can be observed in visual data 941.

The user 999A could request the system 710 to assess image(s) 120A, video(s) 120B, datasets 912,913, and/or data from other system 920,930,940,980,150 for correlation and/or verification of image data 913,120A,B and ratings. For example, the rating 994 can be generated by a third party system 150 and be integrated and/or associated with an asset 930 in the system 900 as a property field 980. For example, the rating 994 can be generated using the system 900 software. For example, the rating 994 can be generated using platform 110 data 120E. For example, the rating 994 can be manually entered and/or imported as database 912 entries 980 using the user interface 999A. For example, the rating 994 can be generated by the FLAIR 710 software. The ratings can be applicable to asset(s) 930, image(s) 913, and/or sensor data 120D, and/or other data 120E, and/or combination thereof. For example, the localized framing system 900 could be provided a standard and/or regulation in its text form as context and/or knowledge base, and use the context / knowledge based to inspect images 913,912 for instances of compliance and/or non-compliance with the standard and/or regulation. For example, the software 710 could utilize specialized algorithms 720 to generate ratings programmatically 994 and use the multi-modal Al 650 to verify whether it agrees with the generated ratings 994.

Examples of ratings (for greater clarity, ratings, evaluations, assessments, studies, indexes, scores and/or reports will be used interchangeably in these examples) can include: pavement condition index, pavement condition rating, pavement condition assessment, pavement marking retro-reflectivity assessment, pavement retro-reflectivity wear and tear assessment, water drainage assessment, ride comfort rating, international roughness index rating, retro-reflectivity of an asset, sightline of an asset, safety assessment, accessibility assessment, condition assessment, structural integrity assessment, illumination assessment, functionality assessment, visibility assessment, operational assessment, environmental impact assessment, air quality assessment, hazard assessment, maintenance needs study, compliance assessment, usability assessment, durability assessment, flood risk assessment, pedestrian safety assessment, cycling safety assessment, collision risk assessment, traffic intersection safety assessment, crossing safety assessment, safety assessment, vibration assessment, traffic flow assessment, traffic needs assessment, tree health assessment, landscaping quality assessment, erosion control assessment, aesthetic assessment, parking assessment, mobility assessment, dimensional needs assessment, bridge deck condition evaluation, culvert condition assessment, tunnel safety assessment, text legibility assessments, transit amenity assessments, transit stop accessibility assessment, graffiti and vandalism assessment, litter and cleanliness assessment, snow and ice control needs assessment, waste collection assessment, recycling program assessment, utilization assessment, traffic assessment, flow assessment, occupancy assessment, soil stability assessment, replacement needs assessment, vegetation control assessment, fire safety assessment, congestion assessment, walkability score, mobility score, cycling score, accessibility score, blight score, investment score, development score, cleanliness score, safety score, beauty score, vibrant score, commercial/residential use score, advertising impression score, lawncare score, garden score, and/or any other quantitative and/or qualitative ratings, evaluations, studies, indexes, or combinations thereof.

Example(s) of rating formats can include value(s) and/or range(s), such as decimal values (For example, 0-1), numerical values (For example, 0-100,1-10), text values (For example, "Excellent, Very Good, Good, Fair, Poor, Fail"), positive and/or negative values

(for example, -1 to 1), binary values (for example, "pass" or "fail", 0 or 1), percentage values (for example, 0-100%), weighted scoring (for example, several numbers are added with different weights, then divided by the number of entries), average scoring (for example, several numbers are added, then divided by the number of entries), cumulative (For example, counting, summing, and/or adding of values), percentage completed (for example, what percent of items where completed), and/or any other mathematical, cumulative, average, algorithmic, generative, and/or quantitative criteria, and/or any other subjective, generative, and/or qualitative criteria, and/or combination thereof.

The user 999A could frame 760 the request (whether localized 950, 950B or not localized) to the insights 995 software 710 to review image(s) 120A and/or video(s) for general recommendations on a variety of topics, whether or not including pre-programmed context. For example, the software 710 knowledge base could be pre-programmed with one or more of the following: national, state, regional, local, and/or other governmental standards, legislation, and/or by-laws. The user 999A could ask 295D the software 710 to broadly review the digital twin 912,913 dataset and report any non-compliances for each individual image 913. The result(s) 995 can be in the form of matching pictures 913, their locations 992, and/or generated insights 995. The insights 995 could be searchable, filtered, and/or otherwise interacted with through the user interface 801-809.

Referring to Figure 3, Figure 5, Figure 6, Figure 7, and Figure 9, it is recognized that the FLAIR software 710 multi-modal Al system 650, 321 can be applied without, together with, in conjunction with, before, and/or after other frame localized image based operations 321, (and/or combination thereof) such as object detection 320A, image classification 320B, segmentation 320C, key points 320D, Al operations 320E, 650, other operations 320F, pre-processing 320G, processing 320H, post-processing 320I, generative Al 320I,650, multi-modal Al 320K, 650, and/or other Al 320L.

For example, the software 710, 710' can use image analysis operations 321 such as object detection 320A, mask detection 320C, center point detection 320D, whether using artificial intelligence 320E, other operations 320F, and/or combination thereof, to identify one or more object(s) of interest in a picture 120A (for example, pictures of potholes, damaged manholes, dumped garbage, fallen signs, people, cars, and/or any other necessary object). The results of the image processing operations can include modified images 380 (for example, redaction 320F of people, cars, faces, licenses plates, homes, windows, and/or other private information, and/or combination thereof), and resulting metadata 380 (for example, such as bounding box(es), mask(s), landmark(s), point(s), description(s), confidence(s)) which can also be correlated 911 to the image(s) 913 and stored in a database 912.

It is recognized that different model(s) 660I can be used in conjunction as part of the system's 600, 900 programming (for example, an object can first be detected 320A using object detection model 660I, then a crop 320H, 330F, 320F of the object can be classified 320B using a different model). It is recognized that the operations 321 can take place on one or more of the following: the platform(s) 110, device(s) 105, server(s) 210, other server(s) 150, and/or combination thereof. It is recognized that the same type(s) of operation 321, and/or different type(s) of operations 321, can take place in one or more step(s) and/or location(s) along the data flow path - Figure 5 - from the initial capture 901,120A,B to when it is presented to the user 999A. It is recognized that general artificial intelligence 650, 320K, 320E can be used to review 740, 770 the results 120' of other intelligent image analysis operations 321.

For example, an image(s) 120A', 913 can already be correlated 910 to an object (for example, a pothole 940) bounding box 380. The system 900, 600 could be programmed with context 660P to review the results 380,601,605,606 (or a portion thereof) of the prior image processing operations 321, and verify that the object (for example, pothole 940 deficiency) is indeed a pothole before presenting 990,780 it to the user 999A. In this example, the localization 950 can be for image(s) 913 with potholes 953, 940 which were pre-processed 959, and the framed 960 request, can be to verify 740 the presence of the pothole 940,992 in the image 913. The advanced Al 650 can also provide additional insights 780, 995 in relation to the reviewed object 940 (for example, the pothole 940,992 can also be prioritized 995 by depth, surface area, severity, location whether it is on a tire track, on a paved surface, on the shoulder, and/or other insights 640,641,642,643,644,645,646 provided by the reviewing Al 650). It is recognized that multi-modal Al 650 processing can take place one or more times per image(s) 120A, 120A', 913,602 and/or video(s) 602, 120B, 120B', s913. It is recognized that different context 660P, prompts 960, and/or combination thereof can be applied to one or more cross-modal artificial intelligence 320E,320K,320I for one or more purposes.

It is recognized that the output 640-646 of the artificial intelligence 320E,320K,320I can be inaccurate and/or wrong. For example, false information, made up information, inconsistent format of output results, inappropriate tone, hallucinations, and/or other output related challenges. The FLAIR software 710 can therefore use one or more of ways to address the output challenges noted. For example, verifying the output of the multi-modal Al 650 in one or more steps along the way 720,740,770, prompting one or more multi-modal Als 650 in one or more way(s) (for example, with different parameters, random response seeds, and/or other criteria), providing additional context 660P to the requests 295D, post-processing 720, 320I the output onto a template (whether using Al 320E or programmatically 320F), incorporating memory 660D of interactions with user 999A to the requests 295D, applying additional forms of operations 321 for verification, applying alternatives forms of operations 321 as replacement operations, triggering other image processing operations 321F based on keywords and/or key-phrases (for verification 740 and/or additional context 380 for the user 999A) contained in the multi-modal 650 output 640,641,642,643,644,645,646, and/or other automated, semi-automated, and/or manual response 990 verification 740, 770 capabilities.

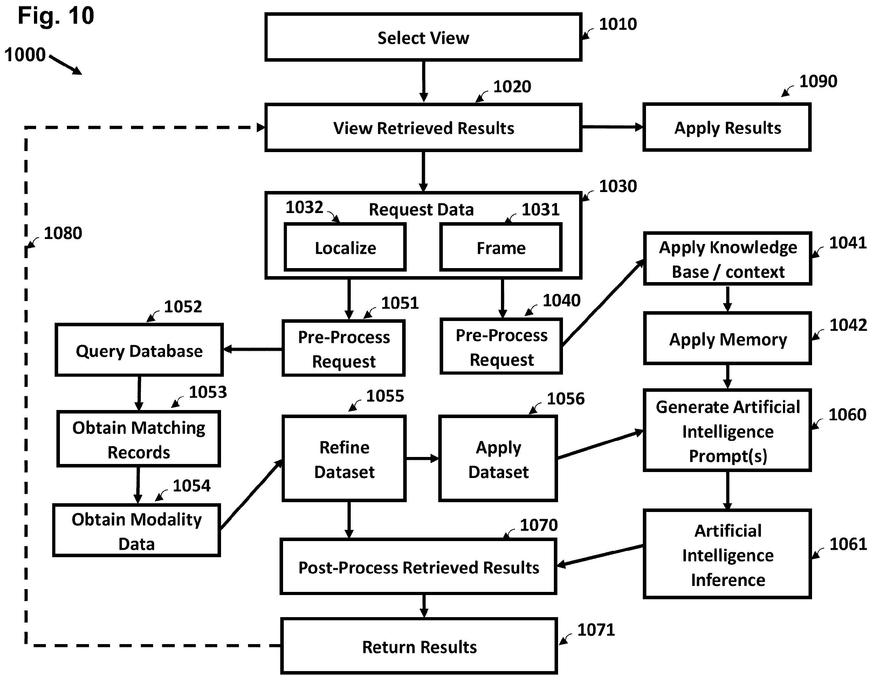

Referring to Figure 10 and Figure 9, is an example 1000 of a how a user 999A can operate the Frame Localized Artificial Intelligence Retrieval system (e.g. any of the systems 100,200,300,500,600,700,900). The user 999A, for example, can be already logged into the system 900, and the user 999A, for example, can have the appropriate permissions and/or access to the system 900. The method 1000 allows the user 999A to select a view 1010 through the user interface 801-809 (it can also be that the view is selected 1010 by default or programmatically without user 999A having to select it). The view 801-809 can be a list view, grid view, gallery view, video player, database view, browser view, map view, file explorer view, and/or other appropriate views for depicting image(s) 120A, 913, video(s) 120B, 913, object properties 912, 120E, and/or location 120D data, and/or combination thereof.

On the selected view 1010, the user 999A can have an initial view of the available data 1020 to process. The view 1020, 801-809 can include all possible data 120, 912,913, or all possible results 912,913, with or without none, some, or all of the corresponding information (such as image(s) 120A, 913, video(s) 120B, 913, location(s) 120D, 912, and/or other properties 120E, 912,980 and/or combination thereof).

The user can then proceed to request 750 at step 1030 the frame localized data retrieval, (e.g. as defined in the frame localized retrieval instructions 295D).

The user 999A, using the interface 801-809, can localize the data by applying filters 1032, applying pre-configured views 1032, zooming in on the map 1032, zooming out on the map 1032, using map selection tools 1032 (such as clicking on an object 1032, multi selecting objects 1032, using shape selector tools 1032 such as drawing a square 1032 and/or polygon 1032, and/or other map based selection criteria 1032), applying database queries using APIs 1032, and/or otherwise specifying to the system 900 a criteria 1032 to match, and/or other selection methods 1032, and/or combination thereof (e.g. as defined in the frame localized retrieval instructions 295D).

It is recognized that the user 999A can apply multiple localization 1032 methods together (e.g. as defined in the frame localized retrieval instructions 295D). For example, by applying a filter 1032 for a specified date, and applying another filter 1032 for a specific data source. It is also recognized that in different embodiments, the data can be localized 1032 using one request 1030 at a time, or by merging multiple localization criteria 1032 onto one request 1030, for example, through pre-processing 1051. Once the localization 1032, 950 request 1030 is applied and/or pre-processed, the software 710 can query 1052 the appropriate database 912, 150 for the selected data and obtain the matching records 1053. The matched 750, 1053 record(s) can include multi-modal 120 data (for example, images 913 and additional data related to the images 912, such as text property fields). The none, some, and/or all of the matching1053 data can selected 1055, organized 1070 (for example, post-processed 1070 for presentation to user 999A) and made available 1071 on the interface 801-809 to the user 999A. It is recognized that some of the localization 950, 1032 can take place on the front end user interface 801-809. For example, some or all of the dataset 912 is presented 1020 to the user 999A, and when the user 999A applies the filters 1032, the filters 1032 exclude 1051 some of the presented data from view 1020 of the user 999A. The localization request 295D, 1032 can therefore, specify already which dataset 1055 items are selected 1053. It is recognized that it can be a combination of front end localization 1032 and backend localization 1032 that takes place. For example, some of the data segmentation 750, 1032 can take place on the user interface 801-809, and some of the data segmentation 750,1032 can take place on the server 210, 710. It can also be that not all information is presented 1020 to the user 999A, and additional information 912 is retrieved on the server 210, from other systems 150,920,930,940,980, and/or combination thereof. The process 1000 can be repeated 1080 as many times as necessary, and/or until the user 999A is satisfied with the segmented 950,750,1032 dataset 912,913.

The user 999A can also frame 1031 the request 1030 for intelligent analysis 1061 (e.g. as defined in the frame localized retrieval instructions 295D). For example, the user 999A can specify a request 801-809 using the user interface 295 (for example, by typing an entry onto a chat interface and/or textbox, or by dictating a request to a microphone of a computing device) to process on the specified 1030,1020,750 dataset. The framed 1031 request can be applied to some 750 or all 912,913 of the available data. The open 1031 request 1030 can be pre-processed 1040 by the software 710 to ensure fit for purpose, properness, compliance, ethical considerations, standardization, and/or otherwise for preparing 1040 it for merging with other information. For example, the user 999A prompt 1031 can be combined 1040 with knowledge base 1041. The knowledge base 1041 can include, for example, human generated description of the data 750, 912, 913, computer generated description of the data 750, 912, 913, available property fields 912 for the data 912, relevant geospatial data 912, relevant asset data 930, relevant issue data 940, and/or any other data 980. The request 1031 can also be enhanced 1040 using memory from previous request(s) 1030, 295D, whereas the inputs (e.g. as defined in the frame localized retrieval instructions 295D) and/or results 990 of the previous requests 1030 are prepended 1042, merged 1042, and/or appended 1042 to the request 1030. The request 1030 can also include 1056 the currently available 1020 and/or localized 1055, 950B dataset 750 to the framed 1031 request 1030.

The software 710,720 can generate artificial intelligence prompts 1060 for the artificial intelligence 650, 1061 to use. The combined 1060 request 1030 data applied to the prompt(s) 1060 can therefore include one or more of the following: available dataset 912,913, localized dataset 1055 and/or applicable data 1054,120,912,913 thereof), knowledge base 1041, memory 1042 of previous requests 1030, and/or memory of previous results 990, and/or combination thereof. The generated prompt(s) 1060 can be specific to each dataset 750,1056 entry (for example, the user 999A prompt 1031,960 is repeated for each unique entry 1056 with the applicable rules 1060). Alternatively, the generated prompt(s) 1060 can be applied in bulk to all dataset 750,1056 entries (for example, the user 999A prompt 1031,960 is used once together with some or all entries 1056 with the applicable rules 1060, and/or related data 912 and/or image(s) 913. It is recognized that, depending on the number of the selected records 1056,750, during pre-proccessing 1051,1040, application of dataset 1056, refinement of dataset(s) 1055, and/or generation artificial intelligence prompt(s) 1060, and/or combination thereof, the combined data 1060 and/or input(s) thereof can be broken down, sub-segmented, and/or otherwise limited to batches 1060 which can be processed by the software 710 and/or the general artificial intelligence 650 system. The output of the Al analysis 650 can be post-processed 1070 by the software 710. For example, the results of the one or more framed 1031 inference(s) 1061 need to get merged and/or correlated to the localized dataset 1055. The frame localized results 1071,990 can then be transmitted and/or presented 1020 back to the user 999A via the client interface 801-809.

The process 1000 can be repeated 1080 as many times as necessary, and/or until the user 999A is content with the frame localized results 990, 1071 retrieved from the system 900. The results 990, 1071 can be applied 1090 in various ways. For example, the results 990, 1071 can be presented 1020 and/or interacted 1090 with on the interface 801-809, re-processed 1030, 1042, saved 1090, exported 1090, synchronized 1090 to the database 912, deleted 1090, discarded 1090, geospatially processed 921, correlated to assets 931, correlated to incidents 941, correlated to other databases 981, integrated 1090 to other systems 150,920,930,940,980, made available for further review by one 999A or more 999B users, used to print results 1090 in paper format, user to email results 1090 to one 999A or more 999B users, used to present used to activate one or more alarm 1090, used to open or close one or more service requests 1090, used to open or close one or more work orders 1090, used to complete inspection records 1090, used to open or close a ticket 1090, used to issue a person and/or organization a ticket 1090, and/or other applied purposes 1090 as noted in the description.

It is recognized that the same process 1000 can also take place programmatically using API calls 720 to the software 710, for example, from a third party system 150, whereas the localization 1032, 950 and framing 1031, 960 are done programmatically. It is recognized that the same process 1000 can also take place programmatically using configurable workflows 720 applied in the software 710, for example, by a user 999A, whereas the localization 1032,950,950B and framing 1031,960 are done programmatically when certain specified conditions are met (e.g. as defined in the frame localized retrieval instructions 295D).

It is recognized that the frame localized Al assisted retrieval 1000 can limit 1041, 1070 the returned results to specified criteria. For example, a user can prompt 1031 the system to search for infrastructure issues in images, whereas the knowledge base 1041 can provide additional context (providing a list of infrastructure issues to look for), or as to the intended perspective of the assessment (or example, the Al model 650 being prompted to act as a road supervisor, bylaw enforcement officer, police officer, or other user role). The framed 1031 request 1030 can therefore be adapted 1040,1060 during processing by adding 1040,1060, removing 1040,1060, or modifying 1040,1060 the content of the frame 1031. This could be done automatically, for example, by knowing the role and/or department of the user 999 which is using the system based on their login and permission information. Similarly, the knowledge based / context 1041 application could narrow the inference 1061 results 1070 to a specified format, mode, type and/or selection (e.g. as defined in the frame localized retrieval instructions 295D).

It is recognized that in some embodiments, the user 999 can prepare a specific one or more frame templates / profiles 1041 (for example, specifying the role or context or knowledge base to use) which can be applied 1040, 1041, 1060 consistently to one or more future prompts 1030, 1031, 1080 (e.g. as defined in the frame localized retrieval instructions 295D).

It is recognized that in some embodiments, the user 999 can prepare a specific one or more frame templates / profiles 1041 (for example, specifying the role or context or knowledge base to use) which can be applied 1040, 1041, 1060 consistently to one or more future prompts 1031, 1080 (e.g. as defined in the frame localized retrieval instructions 295D).

It is recognized that post-processing of retrieved results 1070 could return results 1071, initiate programed localization function 1032 from one or more databases, initiate automated follow up requests 1030 to one or more Als 650, 1061, or FLAIR 710 system components, and other pre-programmed requests options 1030. It is recognized that other image based operations (as noted in Figure 3) can take place automatically, or as part of the user frame 1031 localized 1032 request 1030 (e.g. as defined in the frame localized retrieval instructions 295D).

It is recognized that in some embodiments, the multi-modal Al 650 can perform its own localization 1032,950B functions by interfacing 295 to the system 900 database(s) 912,920,930,940,980 through adaptive software 720 (e.g. as defined in the frame localized retrieval instructions 295D). For example, the knowledge base 1041 could include references to databases 1041, tables 1041, syntax 1041, commands 1041, and/or intelligent artificial intelligence 650 compatible application interface, which would allow the artificial intelligence 650 to apply the localization 1032, 950B,750 functions directly, without the user 999A having to perform them. For example, a user 999A can simply frame a request 1031 such as "please verify all of the posted speed limits on the roads. Do this by comparing the digital sign records, to the road segments, and to the images of the signs. Please alert me of any road segments or speed signs which provide a different posted limit than what is visible on the sign images". The Al system 650, using the API knowledge base 1041, could be aware that there are tables which include signs assets 930, road assets 930, and image data records 912,913, and/or properties thereof 980. The Al system 650 could use the API 720 to query the applicable records (speed signs, and images near speed signs), analyze the images to extract the text number, and compare it to the record 1061, 1070, and return a list of sign IDs 1071 for which the extract text 1070 does not match the speed limit property 1055. Alternatively, the Al system 650 can generate a code snippet that the user 999A can utilize using the interface 801-809 to query the system 710 directly (for example, using database 912 queries or API 720 calls to the FLAIR 710 software).

It is recognized that the integrated framing, localization and Al retrieval process 1000 could break the request 1030 to one or more requests 1030 that could be completed by one or more software 710 components and/or flexible Al 1061,650 models using one or more operations.

It is recognized that the framing, localization and Al retrieval process 1000 could be applied directly to device(s) 105 and/or platform(s) 110 using specialized software 710' components and/or flexible Al 1061 models, whereas the edge computing 105,110 performs at least some of the frame localized Al 710' operations. It is recognized that, in various embodiments the Al enabled retrieval functions 710,710' can take place on the platforms 110, devices 105, server(s) 210, and/or combination thereof.

It is recognized that a human reviewer 999A can review the result(s) 990 using the interface 801-809 and generate service request(s), infraction ticket(s), work order(s), and/or other relevant records through one action (for example, selecting an "approve" button 801-809 via mouse click and/or a shortcut key). It is recognized that the system 900 can populate the appropriate information using the software 710 and/or multi-modal Al 650 for example, by being provided an appropriate template 1041, corresponding images 992, location 991, reviewer information 999A, and/or other relevant information. It is recognized that the generated record 998 can be saved on the server 210, 910. It is recognized that the generated record can be pushed, synchronized and/or population in a specialized system, such as an asset management system 930, issue management system, infraction management system 9XX, and/or other systems.

## Claims

1. A geospatial multi-modal system for intelligent retrieval and/or generation of data from one or more dataset(s) containing image(s) by framing and/or localizing of request(s) which leverage artificial intelligence; said system, applied with one or more digital government application(s), comprising of:
a platform for collecting and/or storing a data set containing at least image data;
at least one client for facilitating a user to interact with the system through a user interface; and
a computing component for executing software instructions to:
operate an artificial intelligence module including a multi-modal artificial intelligence component;
receive from the user interface via a network interface a query, the query framing and/or localizing a request for retrieval and/or generation of data from the data set; and
a server responsible for executing the software instructions and the artificial intelligence module in order to process the query and generate a result data for sending in response to the received query.

2. The system of claim 1, wherein the server processes the data set of geo-referenced image(s) contained within the jurisdiction of a local government and obtained from one or more platforms and wherein the data set represents a digital twin of the governmental jurisdiction; said one or more platforms being comprised of at least one vehicle and at least one camera.

3. The system of claim 1, wherein the platform includes at least one camera.

4. The system of claim 3, wherein the camera is used for obtaining images is selected from camera type consisting of: digital camera(s), CCTV camera(s), image camera(s), device camera(s), video camera(s), webcam(s), smart phone camera(s), tablet camera(s), action camera(s), 360 camera(s), dashcam(s), surveillance camera(s), body camera(s), panoramic camera(s), DLSR camera(s), thermal camera(s), time of flight camera(s), infrared camera(s), night camera(s), multi-focal camera(s), multi-spectral camera(s), , wide angle camera(s), stereoscopic camera(s), multi-view camera(s), pan-tilt-zoom camera(s), near infrared camera(s), satellite camera(s), aerial camera(s), and/or vehicle camera(s).

5. The system of claim 1, wherein the platform data set is retrieved from an intermediate server other than the server.

6. The system of claim 1, wherein the data set is obtained from the platform and further includes at least one of: videos; location coordinates; metadata; audio; file; and databases.

7. The system of claim 1, wherein the server is integrated with and further comprising of one or more of the following systems: Geospatial Systems; Customer Relationship Management system(s), Asset Management System(s), Service Request System(s), Citizen Request Portal(s), 311 System(s), Enterprise Resource Planning System(s), Facility Management System(s), Customer Service System(s), Customer Support System(s), Field Service Management System(s), Document Management System(s), Dispatch System(s), Telematics(s) System(s), Community Portal(s), Ticket System(s), Chat System(s), Help Desk System(s), Road Patrol System(s), Incident Reporting System(s), Police System(s), Fire System(s), Municipal System(s), Land Registry System(s), Surveillance System(s), CCTV System(s), Security System(s), Surveying System(s), Fleet Tracking System(s), and/or Video Surveillance System(s).

8. The system of claim 1, wherein the software instructions provide at least one of the following functions selected from the group consisting of: Geospatial Systems function(s); Customer Relationship Management system(s) function(s), Asset Management System(s) function(s), Service Request System(s) function(s), Citizen Request Portal(s) function(s), 311 System(s) function(s), Enterprise Resource Planning System(s) function(s), Facility Management System(s) function(s), Customer Service System(s) function(s), Customer Support System(s) function(s), Field Service Management System(s) function(s), Document Management System(s) function(s), Dispatch System(s) function(s), Telematics(s) System(s) function(s), Community Portal(s) function(s), Ticket System(s) function(s), Chat System(s) function(s), Help Desk System(s) function(s), Road Patrol System(s) function(s), Incident Reporting System(s) function(s), Police System(s) function(s), Fire System(s) function(s), Municipal System(s) function(s), Land Registry System(s) function(s), Surveillance System(s) function(s), CCTV System(s) function(s), Security System(s) function(s), Surveying System(s) function(s), Fleet Tracking System(s) function(s), and/or Video Surveillance System(s) function(s).

9. The system of claim 1, wherein the artificial intelligence module also uses a single modality Al model for one or more image processing operations such as: object detection, image classification, image segmentation, instance segmentation, key point extraction, pose estimation, and/or image generation.

10. The system of claim 1, wherein the server and/or the platform transfer image data and related data from the data set to the server from one or more of the following network entities: platform(s), server(s), device(s), 3^{rd} party server(s), data storage(s), cloud system(s), app(s), web system(s), municipal system(s), business system(s), government system(s), and/or integration(s).

11. The system of claim 1, wherein the artificial intelligence module comprises at least one multi-modal architecture, wherein multi-modal input data is encoded onto a unified embeddings space, and whereas output can be decoded onto one or more output modalities.

12. The system of claim 1, wherein the artificial intelligence module is further comprised of one or more Al models, where the output of the one or more Al models is verified by one or more further Al models.

13. The system of claim 1, wherein the software instructions further redact personal information from the image data automatically using at least one of: image processing operations, single-modal operations, multi-modal operations, and/or artificial intelligence operations.

14. The system of claim 1, wherein the software instructions process the query to localize a portion of the data set as defined by frame localized retrieval instructions present in the query.

15. The system of claim 1, wherein the software instructions generate data from the system by framing the query received from the user interface.

16. The system of claim 1, wherein the query processed by the software instructions includes both framing and localization operations as defined in frame localized retrieval instructions.

17. The system of claim 1, wherein the software instructions execute a user defined programmable workflow; said workflow comprising of at least framing, localization, and/or retrieval operations, which occur automatically when programmed conditions are met.

18. The system of claim 1, wherein the software instructions execute frame and/or localize one or more request(s) with one or more of the following technical outcome(s): to inventory assets present in geo-referenced images; to inspect geo-referenced images of assets; to inspect geo-referenced image(s) for deficiencies; to inspect geo-referenced image(s) for hazard(s); to inspect geo-referenced image(s) for bylaw infraction(s); to inspect geo-referenced image(s) for code violation(s); to inspect geo-referenced image(s) for compliance issue(s); to inspect geo-referenced image(s) for risk(s); and/or obtain insights and/or ratings in relation to a framed criteria; to inspect images in service requests and generate geo-referenced coordinates from related data such as an address and/or name; and/or a combination thereof.

19. The system of claim 18 wherein the user interface generates from the system result data, using one action such as a click or a button push, one or more of the following: service request, infraction ticket, and/or work order.

20. A method for geospatial multi-modal intelligent retrieval and/or generation of data from a digital government dataset containing images using artificial intelligence instructions comprising the steps of:
making one or more queries to server using a client interface;
receiving the one or more queries, such that the one or more queries frames the dataset, localizes the dataset, generates data and/or retrieves data from the dataset;
processing the one or more queries using the artificial intelligence instructions to generate result data;
presenting the result data to the user through the user interface; and
receiving interaction instructions from the user for further manipulation of the result data, the interaction instructions received from the user interface.
